# EUROPEAN PATENT APPLICATION

(11) **EP 4 599 923 A1**
(43) Date of publication of application: **13.08.2025**
(21) Application number: 23894531.5
(22) Date of filing: 17.11.2023
(51) Int. Cl.: B01D 53/62, B01D 53/14, B01D 53/78, B01D 53/81, C01B 32/50, F25J 1/00

(54) **CARBON DIOXIDE RECOVERY SYSTEM AND CARBON DIOXIDE RECOVERY METHOD**

(30) Priority: 25.11.2022 JP 2022187920; 08.11.2023 JP 2023190519
(71) Applicant: Mitsubishi Heavy Industries, Ltd., Tokyo 100-8332 (JP)
(72) Inventor: TANAKA, Toshimitsu, Tokyo 100-8332 (JP); NAKAMICHI, Kenji, Tokyo 100-8332 (JP)
(74) Representative: Studio Torta S.p.A.
(86) International application number: PCT/JP2023/041488
(87) International publication number: WO 2024/111523

(57) **Abstract**

A carbon dioxide recovery system that recovers carbon dioxide contained in exhaust gas discharged from a combustion device includes: a refrigerator including at least a compressor that compresses a first heat medium, a heat exchanger that cools the first heat medium compressed in the compressor, and an expander that expands the first heat medium cooled in the heat exchanger; a carbon dioxide extraction device that absorbs the carbon dioxide contained in the exhaust gas into an absorption liquid or adsorbs the above-described carbon dioxide into an adsorbent; a separator that separates carbon dioxide gas from the absorption liquid or adsorbent by the thermal energy of the first heat medium compressed in the compressor; and a liquefier that liquefies the carbon dioxide gas separated from the absorption liquid or adsorbent in the separator by the cooling energy of the first heat medium expanded in the expander.

## Description

### TECHNICAL FIELD

This disclosure relates to a carbon dioxide recovery system and a carbon dioxide recovery method for recovering carbon dioxide contained in exhaust gas discharged from a combustion device.

This application claims priority based on Patent Application Nos. 2022-187920 and 2023-190519, filed with the Japan Patent Office on November 25, 2022 and November 8, 2023, respectively, the contents of which are incorporated herein by reference.

### BACKGROUND

Carbon dioxide contained in exhaust gas discharged from a combustion device is absorbed in an absorption liquid such as amine, or adsorbed in an adsorbent, thereby separating carbon dioxide gas from the exhaust gas (see, for example, Patent Document 1). Since the carbon dioxide recovered from the exhaust gas is in a gaseous state, it is necessary to liquefy and densify the carbon dioxide in order to efficiently transport the carbon dioxide to a remote collection site.

### Citation List

### Patent Literature

Patent Document 1: JP2022-099372A

### SUMMARY

### Technical Problem

In order to recover and liquefy carbon dioxide from exhaust gas, both a facility for supplying a heating source for separating carbon dioxide gas from exhaust gas and a facility for supplying a cooling source for liquefying carbon dioxide are required. The introduction of both facilities is likely to place too much of a burden on small and medium-sized businesses. In order to reduce this burden, it is desirable to suppress the increase in size and complexity of the facility for recovering carbon dioxide contained in exhaust gas.

In view of the above-described circumstances, an object of at least one embodiment of the present invention is to provide a carbon dioxide recovery system and a carbon dioxide recovery method that can suppress the increase in size and complexity of the facility for recovering carbon dioxide contained in exhaust gas.

### Solution to Problem

A carbon dioxide recovery system according to one embodiment of the present disclosure is a carbon dioxide recovery system configured to recover carbon dioxide contained in exhaust gas discharged from a combustion device, and includes a refrigerator including at least a compressor configured to compress a first heat medium, a heat exchanger configured to cool the first heat medium compressed in the compressor, and an expander configured to expand the first heat medium cooled in the heat exchanger, a carbon dioxide extraction device configured to absorb the carbon dioxide contained in the exhaust gas into an absorption liquid or to adsorb the carbon dioxide into an adsorbent, a separator configured to separate carbon dioxide gas from the absorption liquid or the adsorbent by the thermal energy of the first heat medium compressed in the compressor, and a liquefier configured to liquefy the carbon dioxide gas separated from the absorption liquid or the adsorbent in the separator by the cooling energy of the first heat medium expanded in the expander.

A carbon dioxide recovery system according to one embodiment of the present disclosure is a carbon dioxide recovery system configured to recover carbon dioxide contained in exhaust gas discharged from a combustion device, including a turbocharger having a compressor configured to compress the exhaust gas and a turbine connected to the compressor, a carbon dioxide extraction device configured to adsorb the carbon dioxide contained in the exhaust gas compressed by the compressor into an adsorbent, a separator configured to separate carbon dioxide gas from the adsorbent, a nitrogen gas discharge line configured to supply nitrogen gas discharged from the separator to the turbine, and a liquefier configured to liquefy the carbon dioxide gas separated from the adsorbent in the separator by the cooling energy of the nitrogen gas expanded in the turbine.

A carbon dioxide recovery method according to one embodiment of the present disclosure is a carbon dioxide recovery method for recovering carbon dioxide contained in exhaust gas discharged from a combustion device, which includes a carbon dioxide extraction step of absorbing the carbon dioxide contained in the exhaust gas into an absorption liquid or adsorbing the carbon dioxide into an adsorbent, a compression step of compressing a first heat medium by a compressor of a refrigerator, a cooling step of cooling the first heat medium compressed in the compressor by a heat exchanger of the refrigerator, an expansion step of expanding the first heat medium cooled in the heat exchanger by an expander of the refrigerator, a separation step of separating carbon dioxide gas from the absorption liquid or the adsorbent by the thermal energy of the first heat medium compressed in the compressor, and a liquefaction step of liquefying the carbon dioxide gas separated from the absorption liquid or the adsorbent in the separation step by the cooling energy of the first heat medium expanded in the expander.

### Advantageous Effects

At least one embodiment of the present disclosure provides a carbon dioxide recovery system and a carbon dioxide recovery method that can prevent the facility for recovering carbon dioxide contained in exhaust gas from becoming large and complicated.

### BRIEF DESCRIPTION OF DRAWINGS

FIG. 1 is a schematic diagram of a carbon dioxide recovery system according to an embodiment of the present disclosure.
FIG. 2 is a schematic diagram of a carbon dioxide recovery system according to an embodiment of the present disclosure.
FIG. 3 is a schematic diagram of a carbon dioxide recovery system according to an embodiment of the present disclosure.
FIG. 4 is a schematic diagram of a carbon dioxide recovery system according to an embodiment of the present disclosure.
FIG. 5 is a schematic diagram of a carbon dioxide recovery system according to an embodiment of the present disclosure.
FIG. 6 is a schematic diagram of a carbon dioxide recovery system according to an embodiment of the present disclosure.
FIG. 7 is a schematic diagram of a carbon dioxide recovery system according to an embodiment of the present disclosure.
FIG. 8 is a schematic diagram of a carbon dioxide recovery system according to an embodiment of the present disclosure.
FIG. 9 is a schematic diagram of a carbon dioxide recovery system according to an embodiment of the present disclosure.
FIG. 10 is a schematic diagram of a carbon dioxide recovery system according to an embodiment of the present disclosure.
FIG. 11 is a schematic diagram of a carbon dioxide recovery system according to an embodiment of the present disclosure.
FIG. 12 is a schematic diagram of a carbon dioxide recovery system according to an embodiment of the present disclosure.
FIG. 13 is a schematic diagram of a carbon dioxide recovery system according to an embodiment of the present disclosure.
FIG. 14 is a schematic diagram of a carbon dioxide recovery system according to an embodiment of the present disclosure.
FIG. 15 is a schematic diagram of a carbon dioxide recovery system according to an embodiment of the present disclosure.
FIG. 16 is a schematic diagram of a carbon dioxide recovery system according to an embodiment of the present disclosure.
FIG. 17 is a schematic diagram of a carbon dioxide recovery system according to an embodiment of the present disclosure.
FIG. 18 is a schematic diagram of a carbon dioxide recovery system according to an embodiment of the present disclosure.
FIG. 19 is a schematic diagram of a carbon dioxide recovery system according to an embodiment of the present disclosure.
FIG. 20 is a schematic diagram of a carbon dioxide recovery system according to an embodiment of the present disclosure.
FIG. 21 is a schematic diagram of a carbon dioxide recovery system according to an embodiment of the present disclosure.
FIG. 22A is a diagram showing the transition of an engine (combustion device) load.
FIG. 22B is a diagram showing the transition of the required heat amount, which is the amount of heat required for regenerating the absorption liquid, and the boiler load, the amount of waste heat from the liquefaction cycle, and the amount of waste heat from the exhaust gas, which are included in the required heat amount.
FIG. 22C is a diagram for explaining the transition of the boiler load.
FIG. 22D is a diagram showing the relationship between the pressure ratio of the compressor in the liquefaction cycle and the amount of waste heat from the liquefaction cycle.
FIG. 23 is a diagram showing the transition of the required heat amount, which is the amount of heat required for regenerating the absorption liquid, and the amount of heat from a steam compressor, the amount of surplus heat in the plant, the amount of waste heat from the liquefaction cycle, and the amount of waste heat from the exhaust gas, which are included in the required heat amount.
FIG. 24 is a diagram showing an example of the hardware configuration of a control device 110.

### DETAILED DESCRIPTION

Some embodiments of the present invention will now be described in detail with reference to the accompanying drawings. It is intended, however, that dimensions, materials, shapes, relative positions and the like of components described in the embodiments or shown in the figures shall be interpreted as illustrative only and not limitative of the scope of the present invention.

### (Configuration of carbon dioxide recovery system)

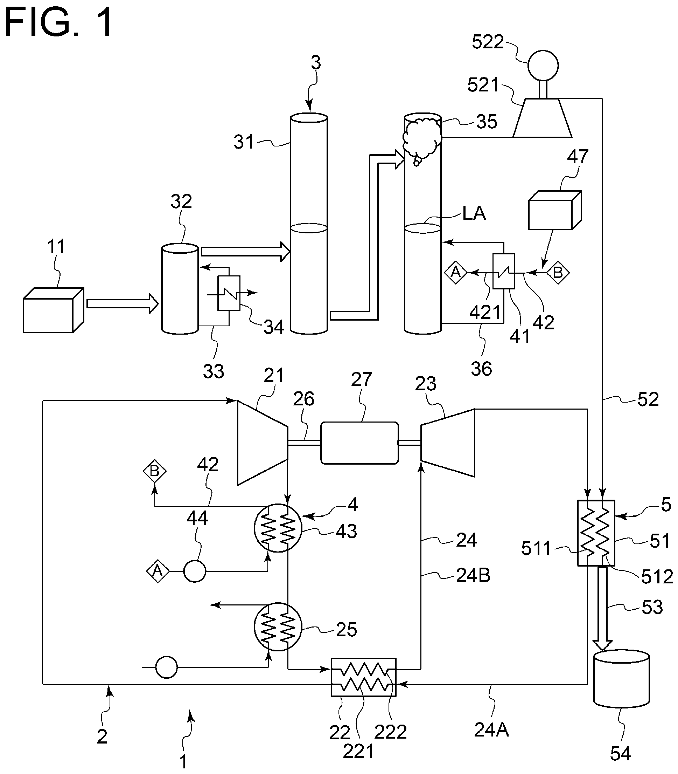

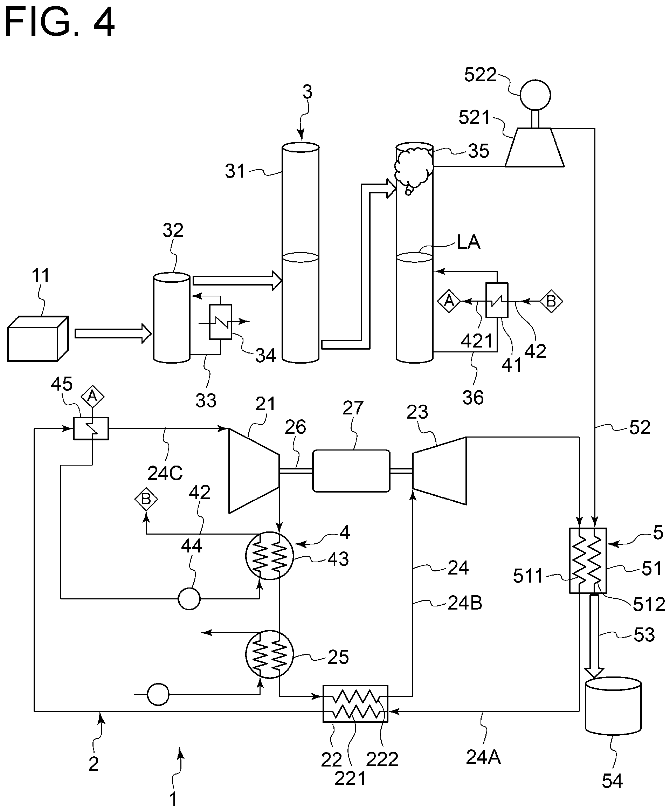

Each of FIGS. 1 to 21 is a schematic diagram of a carbon dioxide recovery system 1 according to an embodiment of the present disclosure. The carbon dioxide recovery system 1 according to some embodiments of the present disclosure is configured to recover carbon dioxide contained in exhaust gas discharged from a combustion device 11 such as an engine. As shown in FIGS. 1 to 21, the carbon dioxide recovery system 1 includes at least a refrigerator 2, a carbon dioxide extraction device 3, a separator 4, and a liquefier 5.

### (Refrigerator)

The refrigerator 2 includes at least a compressor 21, a heat exchanger 22, and an expander 23. For example, in the embodiment shown in FIGS. 1 to 8 and FIGS. 14 to 20, the refrigerator 2 further includes a circulation line 24 configured to circulate the first heat medium. Each of the compressor 21, the heat exchanger 22, and the expander 23 is provided in the circulation line 24. The compressor 21, the heat exchanger 22, the expander 23, and the circulation line 24 constitute a refrigeration cycle. For example, air is used as the first heat medium. The first heat medium may be a heat medium other than air.

The compressor 21 is configured to compress the first heat medium. By driving the compressor 21, the gaseous first heat medium sucked into the compressor 21 from the upstream side of the compressor 21 of the circulation line 24 is compressed. The first heat medium compressed in the compressor 21 is heated and pressurized higher than before it is introduced into the compressor 21, and becomes a high-temperature, high-pressure gas. The heat exchanger 22 is configured to cool the first heat medium compressed in the compressor 21. The expander 23 is configured to expand the first heat medium cooled in the heat exchanger 22. The gaseous first heat medium expanded in the expander 23 is cooled and pressurized lower than before it is introduced into the expander 23, and becomes a low-temperature, low-pressure gas.

The circulation line 24 includes an expansion gas line 24A for guiding the first heat medium expanded in the expander 23 to the compressor 21, and a compressed gas line 24B for guiding the first heat medium compressed in the compressor 21 to the expander 23. Each of the expansion gas line 24A and the compressed gas line 24B forms a flow path for circulating the first heat medium, and is formed by, for example, pipes. Note that each of the pipes forming the circulation line 24 may be a plurality of pipe portions connected via flanges or the like.

### (Heat exchanger)

The heat exchanger 22 is configured to perform heat exchange between the first heat medium flowing through the expansion gas line 24A and the first heat medium flowing through the compressed gas line 24B. The first heat medium flowing through the compressed gas line 24B is compressed in the compressor 21, and is therefore higher in temperature than the first heat medium flowing through the expansion gas line 24A. By the heat exchange in the heat exchanger 22, the first heat medium flowing through the compressed gas line 24B is cooled, and the first heat medium flowing through the expansion gas line 24A is heated. In other words, the heat exchanger 22 includes a low-temperature side heat exchange section 221 through which the first heat medium flows, which is provided in the expansion gas line 24A, and a high-temperature side heat exchange section 222 through which the first heat medium flows, which is provided in the compressed gas line 24B, and heat is transferred from the first heat medium flowing through the high-temperature side heat exchange section 222 to the first heat medium flowing through the low-temperature side heat exchange section 221.

### (Cooler)

As shown in FIGS. 1 to 8 and 14 to 20, the refrigerator 2 may further include a cooler 25 provided between the compressor 21 and the heat exchanger 22 (high-temperature side heat exchange section 222) of the compressed gas line 24B (circulation line 24). The cooler 25 is provided upstream of the heat exchanger 22 of the compressed gas line 24B and is configured to perform heat exchange between the first heat medium flowing through the compressed gas line 24B (cooler 25) and a cooling liquid (for example, seawater or other water) that is lower in temperature than the first heat medium. A pump introduces the cooling liquid into the cooler 25. The first heat medium flowing through the compressed gas line 24B toward the heat exchanger 22 is cooled by the cooling liquid through the heat exchange in the cooler 25. The first heat medium cooled in the cooler 25 is introduced into the heat exchanger 22 (high-temperature side heat exchange section 222) through the compressed gas line 24B.

### (Compressor, expander)

In some embodiments, the expander 23 may be connected to the compressor 21 via a rotating shaft 26. In the embodiments shown in FIGS. 1 to 8 and 14 to 21, the refrigerator 2 further includes an electric motor 27 configured to generate a driving force for driving the compressor 21. The electric motor 27 is configured such that its output is variable. The compressor 21 includes an electric compressor configured to be driven by the electric motor 27 to compress the circulating gas. The compressor 21 and the expander 23 are arranged coaxially with each other via the rotating shaft 26, which is the output shaft of the electric motor 27 for driving the compressor 21, and are each connected to the rotating shaft 26. The electric motor 27 is supplied with current from a power source (such as a generator) (not shown), and is driven by the current supplied from the power source to drive the rotating shaft 26, the compressor 21, and the expander 23. In the expander 23, a part of the expansion energy generated when the gas expands is recovered, and the drive of the compressor 21 is assisted by the recovered expansion energy.

### (Carbon dioxide extraction device)

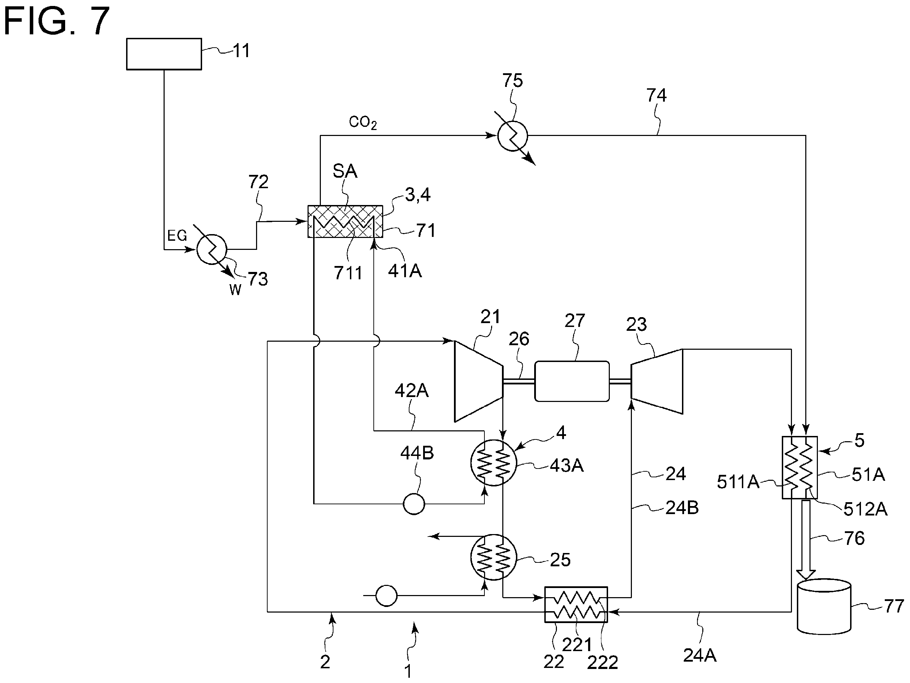

The carbon dioxide extraction device 3 is configured to absorb the carbon dioxide contained in the exhaust gas discharged from the combustion device 11 into an absorption liquid (LA, liquid absorbent), or to adsorb the carbon dioxide contained in the exhaust gas into an adsorbent (SA, solid adsorbent). In the embodiment shown in FIGS. 1 to 6 and FIGS. 14 to 20, the carbon dioxide extraction device 3 is configured to absorb the carbon dioxide contained in the exhaust gas into an absorption liquid. For example, liquid amine can be used as the absorption liquid. The absorption liquid is not limited to liquid amine, and may be any liquid capable of absorbing carbon dioxide. In the embodiment shown in FIGS. 7 to 13 and 21, the carbon dioxide extraction device 3 is configured to adsorb the carbon dioxide contained in the exhaust gas into an adsorbent, as will be described in detail later.

In the embodiment shown in FIGS. 1 to 6 and FIGS. 14 to 20, the carbon dioxide extraction device 3 includes an absorption tower 31 configured to bring the exhaust gas discharged from the combustion device 11 into gas-liquid contact with the absorption liquid. In the absorption tower 31, the exhaust gas introduced into the inside of the absorption tower 31 is brought into gas-liquid contact with the absorption liquid, so that the carbon dioxide contained in the exhaust gas is absorbed by the absorption liquid.

In the embodiment shown in FIGS. 1 to 6 and FIGS. 14 to 20, the carbon dioxide recovery system 1 further includes a cooling tower 32 and a regeneration tower 35. The cooling tower 32 is provided with a cooling water circulation line 33 for extracting cooling water stored in the cooling tower 32 from the cooling tower 32 and injecting it into the cooling tower 32, and a cooling water cooler 34 for cooling the cooling water flowing through the cooling water circulation line 33 with a cold medium. The exhaust gas discharged from the combustion device 11 is introduced into the cooling tower 32. In the cooling tower 32, the exhaust gas introduced into the inside of the cooling tower 32 is brought into gas-liquid contact with the cooling water injected into the inside of the cooling tower 32 via the cooling water circulation line 33, so that the exhaust gas is cooled to about room temperature. The exhaust gas cooled in the cooling tower 32 is introduced into the absorption tower 31. The absorption liquid that absorbed carbon dioxide in the absorption tower 31 is introduced into the regeneration tower 35 and stored inside the regeneration tower 35.

### (Separator)

The separator 4 is configured to separate carbon dioxide gas from the absorption liquid or adsorbent by the thermal energy of the first heat medium compressed in the compressor 21. In the embodiment shown in FIGS. 1 to 6 and FIGS. 14 to 20, the separator 4 is configured to separate carbon dioxide gas from the absorption liquid by the thermal energy of the first heat medium compressed in the compressor 21.

In the embodiment shown in FIGS. 1 to 6 and FIGS. 14 to 20, the absorption liquid stored inside the regeneration tower 35 is heated by the thermal energy of the first heat medium compressed in the compressor 21, so that the carbon dioxide gas is separated from the absorption liquid. The absorption liquid is heated to a predetermined temperature (for example, 140°C) or higher, so that the carbon dioxide gas absorbed in the absorption liquid is separated. The carbon dioxide absorption performance of the absorption liquid is restored by the separation of the carbon dioxide gas in the separator 4.

### (Liquefier)

The liquefier 5 is configured to liquefy the carbon dioxide gas separated from the absorption liquid or the adsorbent in the separator 4 by the cooling energy of the first heat medium expanded in the expander 23. In the embodiment shown in FIGS. 1 to 6 and FIGS. 14 to 20, the liquefier 5 is configured to liquefy the carbon dioxide gas separated from the absorption liquid in the separator 4 by the cooling energy of the first heat medium expanded in the expander 23.

In the embodiment shown in FIGS. 1 to 6 and FIGS. 14 to 20, the liquefier 5 includes a heat exchanger 51 configured to perform heat exchange between the first heat medium flowing through the expansion gas line 24A and the carbon dioxide gas separated from the absorption liquid in the separator 4. By the heat exchange in the heat exchanger 51, the first heat medium flowing through the expansion gas line 24A is heated, and the carbon dioxide gas is cooled and liquefied. The heat exchanger 51 is provided between the expander 23 and the low-temperature side heat exchange section 221 (heat exchanger 22) of the expansion gas line 24A. The heat exchanger 51 includes a first heat medium side heat exchange section 511 through which the first heat medium expanded in the expander 23 flows, and a carbon dioxide gas side heat exchange section 512 through which the carbon dioxide gas separated from the absorption liquid in the separator 4 is introduced via a gas line 52 and through which the carbon dioxide gas flows. The heat is transferred from the carbon dioxide gas flowing through the carbon dioxide gas side heat exchange section 512 to the first heat medium flowing through the first heat medium side heat exchange section 511. The gas line 52 may be provided with a compressor 521 configured to pressurize the carbon dioxide gas flowing through the gas line 52. The compressor 521 may be an electric compressor connected to an electric motor 522 and configured to be driven by the electric motor 522. The carbon dioxide gas pressurized by the compressor 521 flows through the gas line 52 toward the downstream side (the carbon dioxide gas side heat exchange section 512 side).

The carbon dioxide liquefied in the heat exchanger 51 (liquefier 5) is introduced into a storage tank 54 configured to store liquid carbon dioxide through a liquid line 53, and is stored in the storage tank 54.

The carbon dioxide recovery system 1 according to some embodiments includes at least the above-described refrigerator 2, the above-described carbon dioxide extraction device 3, the above-described separator 4, and the above-described liquefier 5. According to the above-described configuration, the carbon dioxide gas separated from the absorption liquid or the adsorbent can be liquefied by using the cooling energy of the first heat medium expanded in the expander 23 of the refrigerator 2 as a cooling source in the liquefier 5. In addition, the carbon dioxide gas can be separated from the absorption liquid or the adsorbent by using the thermal energy of the first heat medium compressed in the compressor 21, which is the exhaust heat of the refrigerator 2, as a heating source in the separator 4. In this case, since the exhaust heat of the refrigerator 2 is utilized, the load on the boiler facility for supplying the heating source can be reduced or the boiler facility can be eliminated. According to the above-described configuration, since both the heating source and the cooling source can be supplied from the refrigerator 2, it is possible to suppress the increase in size and complexity of the carbon dioxide recovery system 1, which is the facility for recovering carbon dioxide contained in the exhaust gas.

In some embodiments, as shown in FIGS. 1 to 6 and 14 to 20, the carbon dioxide extraction device 3 described above is configured to absorb the carbon dioxide contained in the exhaust gas into an absorption liquid. In this case, the carbon dioxide absorbed into the absorption liquid in the carbon dioxide extraction device 3 can be separated from the absorption liquid by the separator 4, and the carbon dioxide gas separated from the absorption liquid can be liquefied by the liquefier 5.

In some embodiments, as shown in FIGS. 1 to 6 and 14 to 20, the compressor 21 described above includes an electric compressor configured to be driven by an electric motor 27 with a variable output.

With the above-described configuration, by increasing the output of the electric motor 27, the temperature and pressure of the first heat medium compressed in the compressor 21 can be increased, and the thermal energy of the first heat medium required as a heating source in the separator 4 can be secured. In this way, it is possible to eliminate the need for a boiler facility for supplying a heating source. In addition, according to the above-described configuration, when the regeneration performance of the absorption liquid (carbon dioxide absorption performance) is poor, the temperature of the first heat medium at the outlet of the compressor 21 can be changed by adjusting the operating point of the turbo machine included in the refrigerator 2, such as by changing the output of the electric motor 27, thereby quickly recovering the regeneration performance of the absorption liquid.

### (First heater, second heater)

In some embodiments, as shown in FIGS. 1 to 6, the separator 4 described above includes at least a first heater 41, a second heat medium supply line 42, and a second heater 43. The first heater 41 is configured to transfer the thermal energy of the second heat medium to the absorption liquid. The second heat medium supply line 42 constitutes a flow path for sending the second heat medium to the first heater 41. The second heater 43 is configured to transfer the thermal energy of the first heat medium flowing between the compressor 21 and the heat exchanger 22 to the second heat medium flowing through the second heat medium supply line 42. An example of the second heat medium is water. The second heat medium may be a heat medium other than water.

The second heat medium is introduced into the second heater 43 by a pump 44 provided in the second heat medium supply line 42. By the heat exchange in the second heater 43, the second heat medium flowing through the second heat medium supply line 42 is heated, and the first heat medium flowing through the compressed gas line 24B (circulation line 24) is cooled. In the illustrated embodiment, the second heater 43 is provided between the compressor 21 and the cooler 25 of the compressed gas line 24B (circulation line 24). The pump 44 is provided upstream of the second heater 43 on the second heat medium supply line 42 and downstream of the first heater 41 and the third heater 45.

The second heat medium heated in the second heater 43 is introduced into the first heater 41 by the pump 44. In the illustrated embodiment, the regeneration tower 35 is provided with an absorption liquid circulation line 36 that returns the absorption liquid that has absorbed carbon dioxide and is stored inside the regeneration tower 35 to the regeneration tower 35 after being extracted from the regeneration tower 35. The first heater 41 is configured to perform heat exchange between the second heat medium introduced into the first heater 41 and the absorption liquid flowing through the absorption liquid circulation line 36. By the heat exchange in the first heater 41, the absorption liquid flowing through the absorption liquid circulation line 36 is heated, and the second heat medium introduced into the first heater 41 is cooled. The absorption liquid heated in the first heater 41 is guided to the regeneration tower 35 through the absorption liquid circulation line 36, whereby the absorption liquid inside the regeneration tower 35 is heated, and the carbon dioxide gas absorbed by the absorption liquid is separated.

With the above-described configuration, the second heater 43 can transfer the thermal energy of the first heat medium to the second heat medium, and the first heater 41 can transfer the thermal energy of the second heat medium transferred from the first heat medium to the absorption liquid.

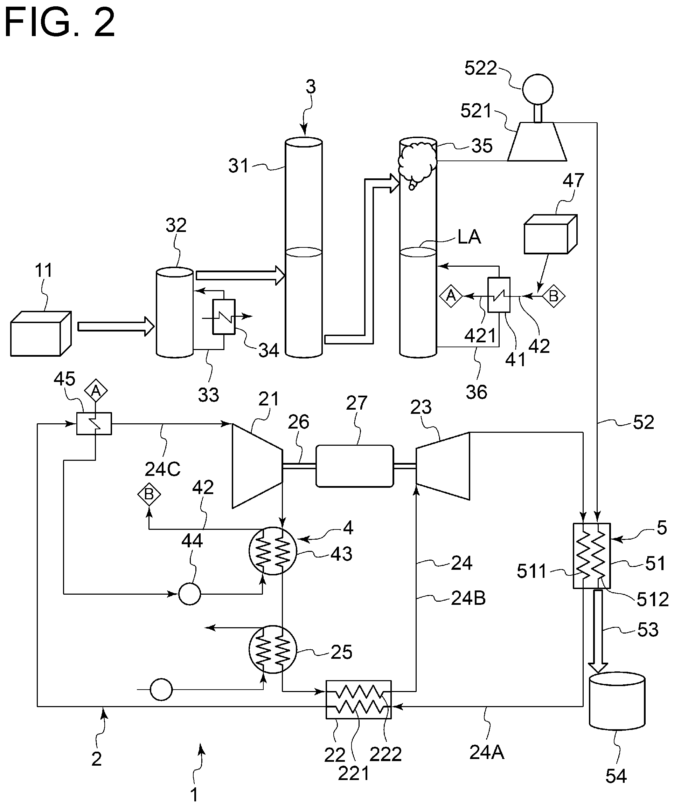

In some embodiments, as shown in FIGS. 1 and 2, the separator 4 described above may further include an auxiliary boiler 47 for heating the second heat medium flowing through the second heat medium supply line 42. In this case, the thermal energy generated by the auxiliary boiler 47 can be used as part of the heat required as a heating source in the separator 4.

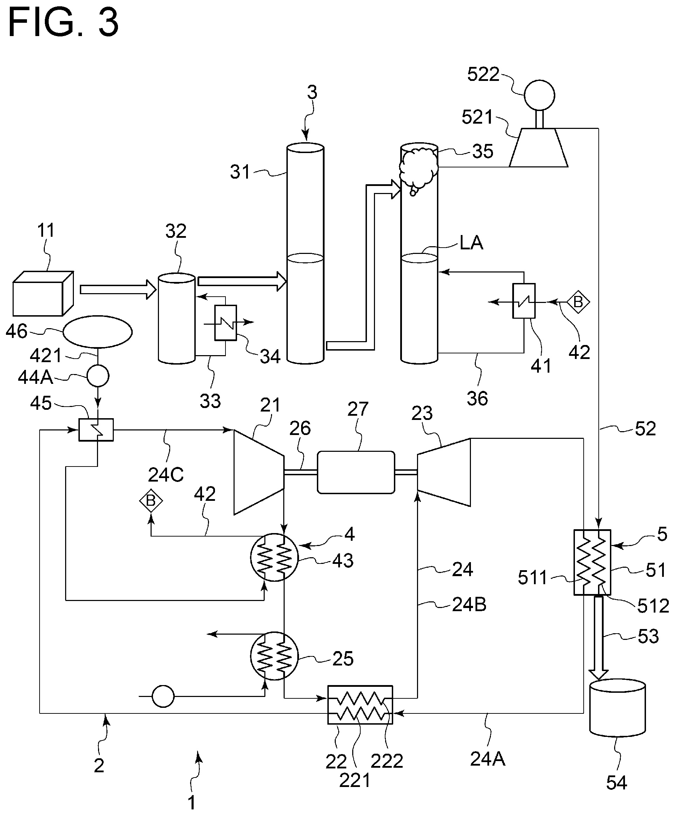

In some embodiments, as shown in FIG. 3, unused exhaust heat from a plant equipped with the carbon dioxide recovery system 1 can be used as the second heat medium introduced into the second heat medium supply line 42 or as a heating source for the second heat medium. In the embodiment shown in FIG. 3, the upstream end 421 of the second heat medium supply line 42 is connected to a second heat medium storage section 46 that stores a gaseous or liquid heat medium (for example, air or water that has become hotter than room temperature) having the unused exhaust heat. In addition, the second heat medium supply line 42 may be provided with a blower 44A for sending a gaseous second heat medium instead of a pump 44 for sending a liquid second heat medium. In the embodiment shown in FIG. 3, the blower 44A is provided downstream of the second heat medium storage section 46 of the second heat medium supply line 42 and upstream of the second heater 43 and the third heater 45. In this case, the thermal energy of the unused exhaust heat can be used as part of the heat amount required as a heating source in the separator 4.

In some other embodiments, the above-described separator 4 may be configured to perform heat exchange between either the absorption liquid stored in the regeneration tower 35 or the absorption liquid flowing through the absorption liquid circulation line 36, and the first heat medium flowing between the compressor 21 and the cooler 25 of the compressed gas line 24B (circulation line 24).

In some embodiments, as shown in FIGS. 1, 2, and 4 to 6, the above-described upstream end 421 of the second heat medium supply line 42 is connected to the first heater 41. In this case, the second heat medium is circulated through the second heat medium supply line 42 and the first heater 41 by the above-described pump 44 or the blower 44A.

### (Third heater)

In some embodiments, as shown in FIGS. 2 to 6 and 14 to 20, the refrigerator 2 described above includes a first heat medium supply line 24C for sending the first heat medium from the liquefier 5 to the compressor 21. The first heat medium supply line 24C constitutes a part of the expansion gas line 24A. In some embodiments, as shown in FIGS. 2 to 6, the separator 4 described above further includes a third heater 45 configured to transfer the thermal energy of the second heat medium flowing through the second heat medium supply line 42 to the first heat medium flowing through the first heat medium supply line 24C.

In the illustrated embodiment, the third heater 45 is provided between the low-temperature side heat exchange section 221 (heat exchanger 22) of the first heat medium supply line 24C and the compressor 21.

According to the above-described configuration, by the heat exchange in the third heater 45, the second heat medium introduced into the second heater 43 is cooled, and the first heat medium introduced into the compressor 21 is heated. As a result, the amount of heat that the second heat medium recovers from the first heat medium in the second heater 43, and that is transferred to the absorption liquid in the first heater 41 (the amount of heat supplied to the regeneration tower 35) can be increased.

In some embodiments, as shown in FIGS. 2 and 4 to 6, the upstream end 421 of the second heat medium supply line 42 provided with the above-described third heater 45 is connected to the first heater 41.

According to the above-described configuration, the second heat medium from which thermal energy has been recovered by the absorption liquid in the first heater 41 is introduced into the third heater 45. Then, by the heat exchange in the third heater 45, the second heat medium introduced into the second heater 43 is cooled, and the first heat medium introduced into the compressor 21 is heated. In this case, by circulating the second heat medium, it is possible to suppress a decrease in the coefficient of performance of the refrigerator 2, while increasing the amount of heat that the second heat medium recovers from the first heat medium in the second heater 43, and that is transferred to the absorption liquid in the first heater 41 (the amount of heat supplied to the regeneration tower 35).

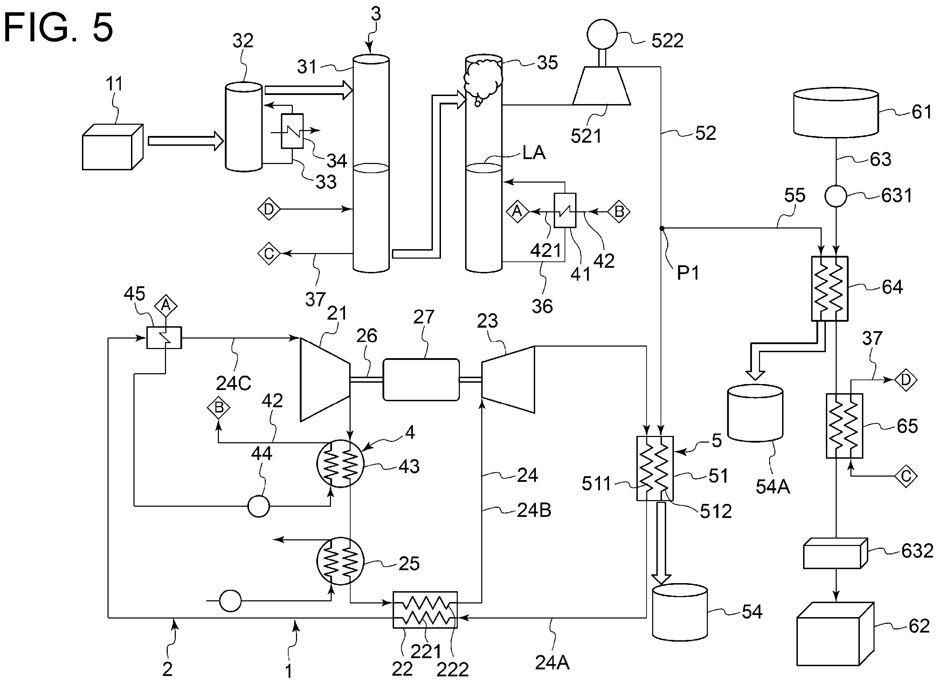

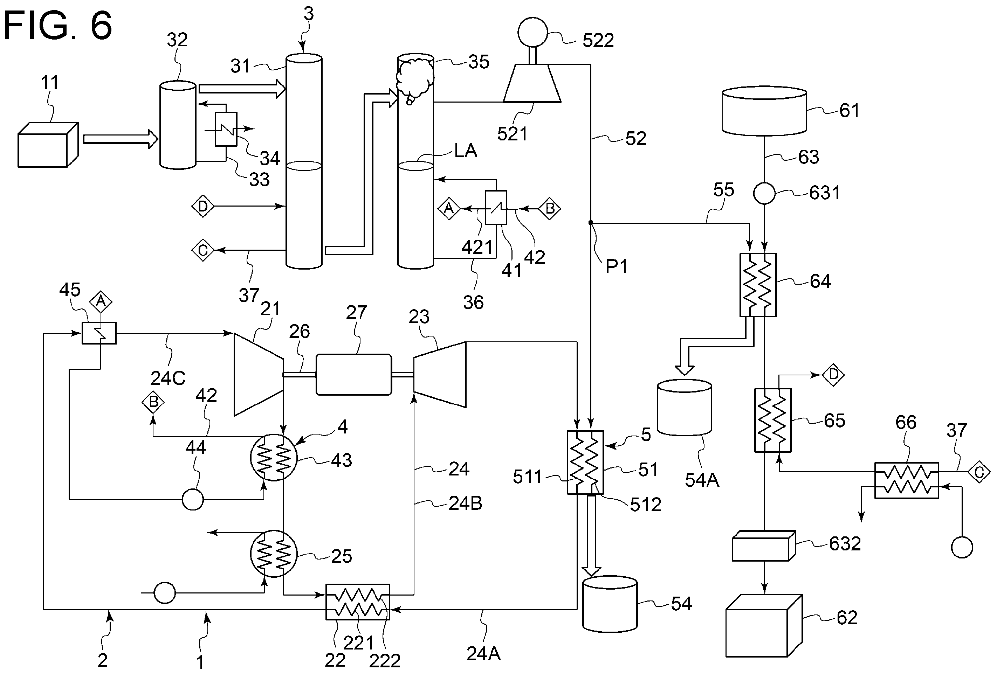

In some embodiments, as shown in FIGS. 5 and 6, the above-described carbon dioxide recovery system 1 further includes a first fuel tank 61, a first combustion device 62, a first fuel supply line 63, and an auxiliary liquefier 64. The first combustion device 62 may be the same as the combustion device 11 described above.

The first fuel tank 61 is configured to store the first fuel in a liquid state. In the following, liquefied natural gas (LNG) is used as an example of the first fuel supplied from the first fuel tank 61, which is the supply source of the first fuel. However, the present disclosure is also applicable to cases where a liquefied gas other than liquefied natural gas (such as liquefied petroleum gas or liquid hydrogen) is used as the first fuel supplied from the first fuel tank 61.

The first combustion device 62 is configured to burn the first fuel in a gaseous state. The first fuel supply line 63 is a flow path (pipeline) for sending the first fuel extracted from the first fuel tank 61 to the first combustion device 62. The first fuel supply line 63 is provided with at least one of a pump 631 for sending the first liquid fuel and a blower 632 for sending the first gaseous fuel (in the illustrated example, both are provided). In the embodiment shown in FIG. 5 and FIG. 6, the pump 631 is provided upstream of the auxiliary liquefier 64 of the first fuel supply line 63 (first fuel tank 61 side). The blower 632 is provided downstream of the auxiliary liquefier 64 and the absorption liquid cooler 65 of the first fuel supply line 63 (first combustion device 62 side).

The carbon dioxide recovery system 1 includes a first carbon dioxide gas supply line (gas line 52) for sending carbon dioxide gas separated from the absorption liquid in the separator 4 to the liquefier 5, and a second carbon dioxide gas supply line 55, which branches from the first carbon dioxide gas supply line 52 at the branch point P1. The auxiliary liquefier 64 is configured to liquefy the carbon dioxide gas flowing through the second carbon dioxide gas supply line 55 by the cooling energy of the first fuel flowing through the first fuel supply line 63.

The auxiliary liquefier 64 is configured to perform heat exchange between the carbon dioxide gas flowing through the second carbon dioxide gas supply line 55 and the first fuel flowing through the first fuel supply line 63. By the heat exchange in the auxiliary liquefier 64, the first fuel flowing through the first fuel supply line 63 is heated, and the carbon dioxide gas flowing through the second carbon dioxide gas supply line 55 is cooled and liquefied. The carbon dioxide liquefied in the auxiliary liquefier 64 is introduced into the storage tank 54A configured to store liquid carbon dioxide, and is stored in the storage tank 54A.

With the above-described configuration, in the refrigerator 2, the thermal energy of the first heat medium compressed in the compressor 21, which is the heating source of the separator 4, may be greater than the cooling energy of the first heat medium expanded in the expander 23, which is the cooling source of the liquefier 5. In this case, if carbon dioxide is to be recovered up to the maximum heating source capacity, there will be a shortage of cooling energy required to liquefy the carbon dioxide. The auxiliary liquefier 64 can liquefy a portion of the carbon dioxide gas separated from the absorption liquid. In other words, the cooling energy of the first fuel can compensate for the cooling energy shortage of the refrigerator 2.

In some embodiments, as shown in FIGS. 5 and 6, the above-described carbon dioxide recovery system 1 further includes an absorption liquid cooler 65 configured to cool either the absorption liquid or the heat medium that exchanges heat with the absorption liquid by the cooling energy of the first fuel flowing downstream of the auxiliary liquefier 64 of the first fuel supply line 63.

In the illustrated embodiment, the absorption tower 31 is provided with an absorption liquid circulation line 37 that returns either the absorption liquid stored inside the absorption tower 31 or the heat medium that has exchanged heat with the absorption liquid to the absorption tower 31 after extracting it from the absorption tower 31. The absorption liquid cooler 65 is configured to perform heat exchange between the first fuel introduced into the absorption liquid cooler 65 and the absorption liquid (or the heat medium that exchanges heat with the absorption liquid) flowing through the absorption liquid circulation line 37. By the heat exchange in the absorption liquid cooler 65, the absorption liquid flowing through the absorption liquid circulation line 37 is cooled, and the first fuel introduced into the absorption liquid cooler 65 is heated. The absorption liquid cooled in the absorption liquid cooler 65 is guided to the absorption tower 31 via the absorption liquid circulation line 37, thereby cooling the absorption liquid inside the absorption tower 31.

According to the above-described configuration, the absorption liquid can be cooled directly by the cooling energy of the first fuel through the heat exchange in the absorption liquid cooler 65, or indirectly through the heat medium that exchanges heat with the absorption liquid. By cooling the absorption liquid, the efficiency of absorbing carbon dioxide from the exhaust gas can be improved.

In some embodiments, as shown in FIG. 6, the above-described carbon dioxide recovery system 1 further includes an absorption liquid precooler 66 configured to cool the absorption liquid guided to the absorption liquid cooler 65 or the heat medium that exchanges heat with the absorption liquid, by a cooling liquid.

The absorption liquid precooler 66 is provided upstream of the absorption liquid cooler 65 on the absorption liquid circulation line 37, and is configured to perform heat exchange between the absorption liquid (or a heat medium that exchanges heat with the absorption liquid) flowing through the absorption liquid circulation line 37 and a cooling liquid (for example, seawater or other water) that is lower in temperature than the absorption liquid. A cooling liquid is introduced into the absorption liquid precooler 66 by a pump. The absorption liquid flowing through the absorption liquid circulation line 37 toward the absorption liquid cooler 65 is cooled by the above-described cooling liquid through the heat exchange in the absorption liquid precooler 66. The absorption liquid cooled in the absorption liquid precooler 66 is introduced into the absorption liquid cooler 65 through the absorption liquid circulation line 37.

With the above-described configuration, the temperature of the absorption liquid can be adjusted by adjusting the amount of cooling (amount of heat exchange) in the absorption liquid precooler 66 without changing the amount of heat exchange in the auxiliary liquefier 64.

In some embodiments, as shown in FIGS. 7 to 13 and 21, the carbon dioxide extraction device 3 described above is configured to adsorb the carbon dioxide contained in the exhaust gas onto a solid adsorbent. In this case, the carbon dioxide adsorbed onto the solid adsorbent in the carbon dioxide extraction device 3 can be separated from the adsorbent by the separator 4, and the carbon dioxide gas separated from the adsorbent can be liquefied by the liquefier 5.

### (Carbon dioxide extraction device)

The carbon dioxide extraction device 3 is configured to adsorb the carbon dioxide contained in the exhaust gas discharged from the combustion device 11 to the adsorbent. In the embodiment shown in FIGS. 7 to 13 and 21, the carbon dioxide extraction device 3 includes a casing 71 (71A, 71B) that contains the adsorbent SA.

The adsorbent is configured to adsorb the carbon dioxide contained in the exhaust gas and separate the adsorbed carbon dioxide at least by temperature swing adsorption (TSA). In the temperature swing adsorption (TSA), a temperature difference is used as a means for separating carbon dioxide from the exhaust gas. That is, in the temperature swing adsorption (TSA), the adsorbent that has adsorbed carbon dioxide is heated to a second predetermined temperature that is higher than a first predetermined temperature at which carbon dioxide is adsorbed by the adsorbent, thereby separating the carbon dioxide gas from the adsorbent. As the adsorbent, for example, a solid adsorbent such as zeolite can be used. Note that the adsorbent is not limited to zeolite as long as it is a solid that can adsorb carbon dioxide. The adsorbent may be, for example, a metal-organic framework (MOF).

Inside the casing 71, an adsorption step is performed in which the carbon dioxide contained in the exhaust gas discharged from the combustion device 11 is adsorbed by the adsorbent SA, and a separation step is performed in which the carbon dioxide adsorbed by the adsorbent SA in the adsorption step is separated from the adsorbent.

In the embodiment shown in FIG. 7, the carbon dioxide extraction device 3 includes an exhaust gas introduction line 72 for guiding the exhaust gas discharged from the combustion device 11 to the casing 71, and an exhaust gas precooler 73 provided in the exhaust gas introduction line 72 and configured to cool the exhaust gas flowing through the exhaust gas introduction line 72 with a cold medium (for example, a cooling liquid).

In the embodiment shown in FIG. 7, the exhaust gas discharged from the combustion device 11 is introduced into the exhaust gas precooler 73 through a portion of the exhaust gas introduction line 72 upstream of the exhaust gas precooler 73, and is cooled in the exhaust gas precooler 73. Moisture W is separated from the exhaust gas EG in the exhaust gas precooler 73. The exhaust gas introduced into the casing 71 through a portion of the exhaust gas introduction line 72 downstream of the exhaust gas precooler 73 is cooled in the exhaust gas precooler 73 and has a relatively low temperature, so that the carbon dioxide contained in the exhaust gas is adsorbed by the adsorbent.

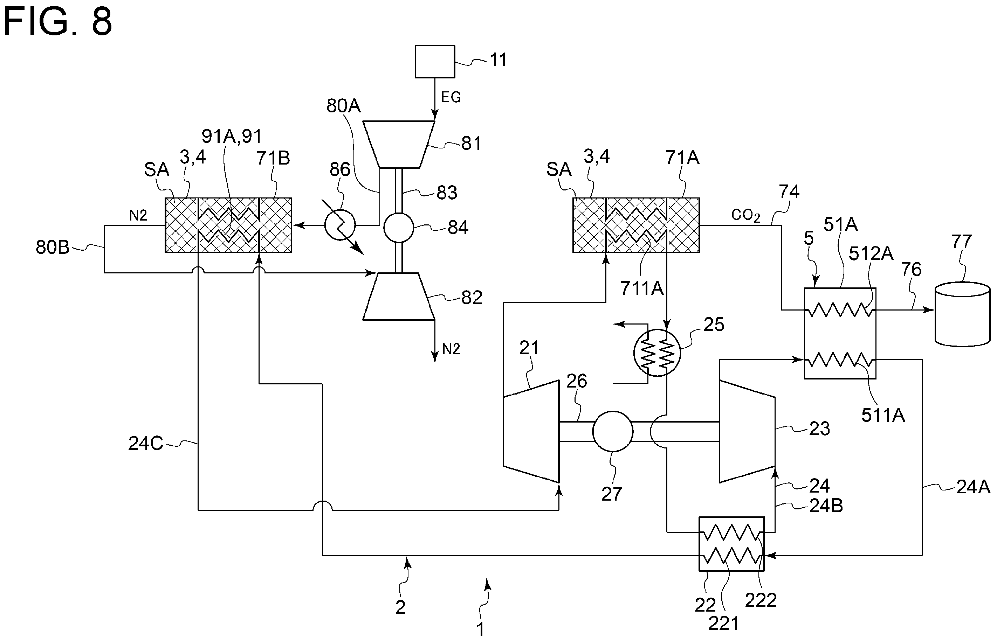

In the embodiment shown in FIGS. 8 to 13, the carbon dioxide extraction device 3 includes a first casing 71A that contains the adsorbent SA, and a second casing 71B that contains the adsorbent SA. While the above-described separation step is performed in one of the first casing 71A and the second casing 71B, the above-described adsorption step is performed in the other of the first casing 71A and the second casing 71B.

In the embodiment shown in FIGS. 8 to 13, the carbon dioxide extraction device 3 includes an exhaust gas introduction line 80A for guiding exhaust gas discharged from the combustion device 11 to the second casing 71B, an exhaust gas compressor 81 provided in the exhaust gas introduction line 80A, and an exhaust gas precooler 86 provided downstream of the exhaust gas compressor 81 on the exhaust gas introduction line 80A. As shown in FIGS. 8 to 13, the carbon dioxide extraction device 3 may further include an exhaust gas discharge line 80B for discharging the exhaust gas (nitrogen-rich gas) in which carbon dioxide has been adsorbed by the adsorbent SA in the second casing 71B from the second casing 71B, an exhaust gas expander 82 provided in the exhaust gas discharge line 80B, and an electric motor 84 configured to generate a driving force for driving the exhaust gas compressor 81.

The exhaust gas compressor 81 is configured to compress the exhaust gas flowing through the exhaust gas introduction line 80A. By driving the exhaust gas compressor 81, the exhaust gas sucked into the exhaust gas compressor 81 from the upstream side of the exhaust gas introduction line 80A is compressed. The exhaust gas compressed in the exhaust gas compressor 81 is heated and pressurized more than before it is introduced into the exhaust gas compressor 81. The exhaust gas precooler 86 is configured to cool the exhaust gas compressed in the exhaust gas compressor 81 and flowing through the exhaust gas introduction line 80A.

The exhaust gas expander 82 is configured to expand the exhaust gas flowing through the exhaust gas discharge line 80B. The exhaust gas expander 82 is connected to the exhaust gas compressor 81 via a rotating shaft 83. The exhaust gas compressor 81 includes an electric compressor configured to be driven by an electric motor 84 to compress the exhaust gas. The exhaust gas compressor 81 and the exhaust gas expander 82 are arranged coaxially with each other via a rotating shaft 83, which is the output shaft of the electric motor 84 for driving the exhaust gas compressor 81, and are each connected to the rotating shaft 83. The electric motor 84 is supplied with current from a power source (such as a generator) not shown, and is driven by the current supplied from the power source to drive the rotating shaft 83, the exhaust gas compressor 81, and the exhaust gas expander 82. In the exhaust gas expander 82, a part of the expansion energy generated when the gas expands is recovered, and the recovered expansion energy assists in driving the exhaust gas compressor 81.

In the embodiment shown in FIGS. 7 to 13, the carbon dioxide recovery system 1 includes a carbon dioxide gas discharge line 74 for discharging the carbon dioxide gas separated from the adsorbent in the casing 71, 71A from the casing 71, 71A, a liquid carbon dioxide discharge line 76 for discharging the liquid carbon dioxide liquefied in the liquefier 5, and a storage tank 77 configured to store the liquid carbon dioxide. The carbon dioxide gas discharge line 74 has an upstream end connected to the casing 71, 71A and a downstream end connected to the liquefier 5. The liquid carbon dioxide discharge line 76 has an upstream end connected to the liquefier 5 and a downstream end connected to the storage tank 77.

Each of the exhaust gas introduction line 72, the exhaust gas introduction line 80A, the exhaust gas discharge line 80B, the carbon dioxide gas discharge line 74, and the liquid carbon dioxide discharge line 76 forms a flow path for circulating a fluid (exhaust gas, carbon dioxide gas, liquid carbon dioxide), and is formed by, for example, pipes. As shown in FIG. 7, the carbon dioxide recovery system 1 may be provided with a carbon dioxide gas precooler 75 that is provided in the carbon dioxide gas discharge line 74 and configured to cool the carbon dioxide gas flowing through the carbon dioxide gas discharge line 74 with a cold medium (for example, a cooling liquid).

### (Separator)

In the embodiment shown in FIG. 7 to FIG. 13, the separator 4 is configured to separate the carbon dioxide gas from the adsorbent by the thermal energy of the first heat medium compressed in the compressor 21. In the embodiment shown in FIG. 7 to FIG. 13, the separator 4 is configured to separate the carbon dioxide gas from the adsorbent by heating the adsorbent contained in the casing 71, 71A by the thermal energy of the first heat medium compressed in the compressor 21. The adsorbent is heated to a predetermined temperature (for example, 150°C) or higher, whereby the carbon dioxide gas adsorbed in the adsorbent is separated. As the carbon dioxide gas is separated in the separator 4, the carbon dioxide absorption performance of the adsorbent is restored.

In the embodiment shown in FIG. 7, the separator 4 includes at least a first heater 41A, a second heat medium supply line 42A, and a second heater 43A. The first heater 41A is configured to transfer the thermal energy of the second heat medium to the adsorbent. The second heat medium supply line 42A constitutes a flow path for sending the second heat medium to the first heater 41A. The second heater 43A is configured to transfer the thermal energy of the first heat medium flowing between the compressor 21 and the heat exchanger 22 to the second heat medium flowing through the second heat medium supply line 42A. An example of the second heat medium is water. The second heat medium may be a heat medium other than water.

The second heat medium is introduced into the second heater 43A by a pump 44B provided in the second heat medium supply line 42A. By the heat exchange in the second heater 43A, the second heat medium flowing through the second heat medium supply line 42A is heated, and the first heat medium flowing through the compressed gas line 24B (circulation line 24) is cooled. In the illustrated embodiment, the second heater 43A is provided between the compressor 21 and the cooler 25 of the compressed gas line 24B (circulation line 24). The pump 44B is provided upstream of the second heater 43A and downstream of the first heater 41A on the second heat medium supply line 42A.

The second heat medium heated in the second heater 43A is introduced into the first heater 41A by the pump 44B. The first heater 41A is configured to perform heat exchange between the second heat medium introduced into the first heater 41A and the adsorbent contained inside the casing 71 (or the air inside the casing 71). In the embodiment shown in FIG. 7, the first heater 41A is disposed inside the casing 71 and includes a heat exchange section (pipes) 711 through which the second heat medium flows. Heat exchange is performed between the second heat medium flowing through the heat exchange section 711 and the adsorbent. By the heat exchange in the first heater 41A, the adsorbent contained inside the casing 71 is heated, and the second heat medium introduced into the first heater 41A is cooled. By heating the adsorbent contained inside the casing 71, the carbon dioxide gas adsorbed by the adsorbent is separated.

In the embodiment shown in FIG. 8 to FIG. 13, the separator 4 described above is configured to perform heat exchange between either the adsorbent contained inside the casing 71A or the air inside the casing 71A and the first heat medium flowing between the compressor 21 and the cooler 25 of the compressed gas line 24B (circulation line 24). In the embodiment shown in FIG. 8 to FIG. 13, the separator 4 is disposed inside the casing 71A and includes a heat exchange section (pipes) 711A through which the first heat medium compressed in the compressor 21 flows. Heat exchange is performed between the first heat medium flowing through the heat exchange section 711A and the adsorbent. The heat exchange section 711A is provided between the compressor 21 and the cooler 25 of the compressed gas line 24B (circulation line 24). By the heat exchange in the heat exchange section 711A, the adsorbent contained inside the casing 71A is heated, and the first heat medium flowing between the compressor 21 and the cooler 25 of the compressed gas line 24B is cooled. The adsorbent contained inside the casing 71A is heated, so that the carbon dioxide gas adsorbed by the adsorbent is separated.

### (Liquefier)

In the embodiment shown in FIGS. 7 to 13, the liquefier 5 is configured to liquefy the carbon dioxide gas separated from the adsorbent in the separator 4 by the cooling energy of the first heat medium expanded in the expander 23. In the embodiment shown in FIGS. 7 to 13, the liquefier 5 includes a heat exchanger 51A configured to perform heat exchange between the first heat medium flowing through the expansion gas line 24A and the carbon dioxide gas separated from the adsorbent in the separator 4.

By the heat exchange in the heat exchanger 51A, the first heat medium flowing through the expansion gas line 24A is heated and the carbon dioxide gas is cooled and liquefied. The heat exchanger 51A is provided between the expander 23 of the expansion gas line 24A and the low-temperature side heat exchange section 221 (heat exchanger 22). The heat exchanger 51A includes a first heat medium side heat exchange section 511A through which the first heat medium expanded in the expander 23 flows, and a carbon dioxide gas side heat exchange section 512A through which the carbon dioxide gas separated from the adsorbent in the separator 4 is introduced via a carbon dioxide gas discharge line 74 and the carbon dioxide gas flows. Thus, heat is transferred from the carbon dioxide gas flowing in the carbon dioxide gas side heat exchange section 512A to the first heat medium flowing in the first heat medium side heat exchange section 511A.

The carbon dioxide liquefied in the heat exchanger 51A (liquefier 5) is introduced into the storage tank 77 configured to store liquid carbon dioxide through the liquid carbon dioxide discharge line 76, and is stored in the storage tank 77.

In some embodiments, as shown in FIGS. 8 to 13, the carbon dioxide recovery system 1 described above further includes a preheater 91 configured to transfer thermal energy of at least one of the adsorbent contained in the second casing 71B or the exhaust gas having passed through the second casing 71B to the first heat medium flowing through the first heat medium supply line 24C.

In the embodiments shown in FIGS. 8, 9, 11 and 13, the preheater 91 includes a first preheater 91A configured to transfer thermal energy of the adsorbent contained in the second casing 71B to the first heat medium flowing through the first heat medium supply line 24C. In the illustrated embodiment, the first preheater 91A includes a heat exchange section (pipes) provided inside the second casing 71B through which the exhaust gas flows, and a heat exchange section (pipes) provided between the low-temperature side heat exchange section 221 (heat exchanger 22) of the first heat medium supply line 24C and the compressor 21 through which the first heat medium flows.

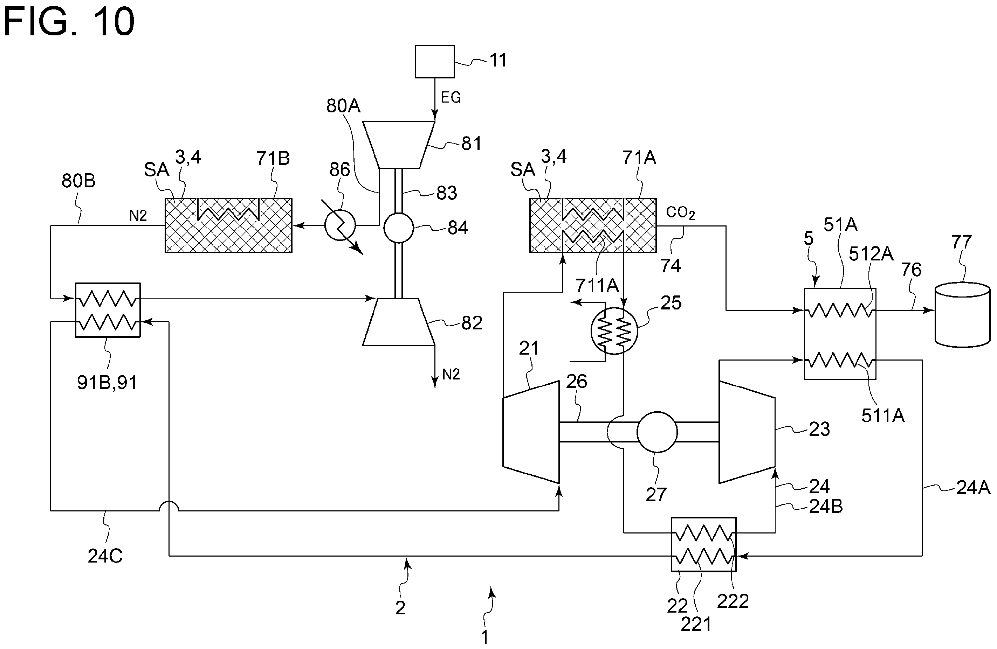

In the embodiment shown in FIGS. 10 to 13, the preheater 91 includes a second preheater 91B configured to transfer the thermal energy of the exhaust gas having passed through the second casing 71B to the first heat medium flowing through the first heat medium supply line 24C. In the illustrated embodiment, the second preheater 91B includes a heat exchange section (pipes) provided in the exhaust gas discharge line 80B through which the exhaust gas flows, and a heat exchange section (pipes) provided between the low-temperature side heat exchange section 221 (heat exchanger 22) of the first heat medium supply line 24C and the compressor 21 through which the first heat medium flows.

With the above-described configuration, the first heat medium introduced into the compressor 21 is heated by the thermal energy of the adsorbent (adsorption heat generated when the adsorbent adsorbs carbon dioxide) or the thermal energy of the exhaust gas heated by the adsorption heat through the heat exchange in the preheater 91. In this case, the thermal energy of the adsorbent (adsorption heat) or the thermal energy of the exhaust gas heated by the adsorption heat can be used as part of the heat required as a heating source in the separator 4.

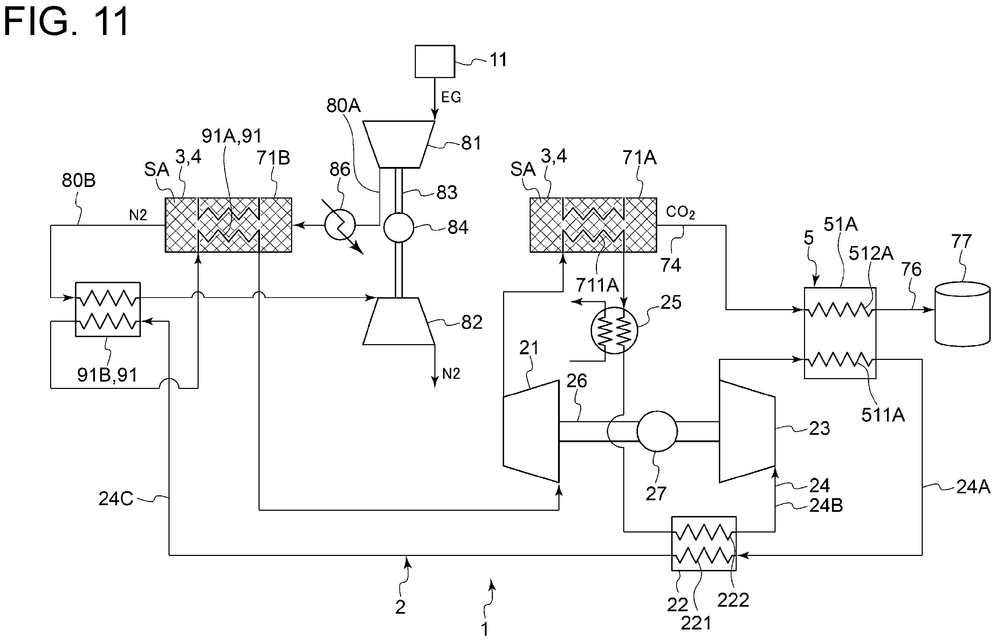

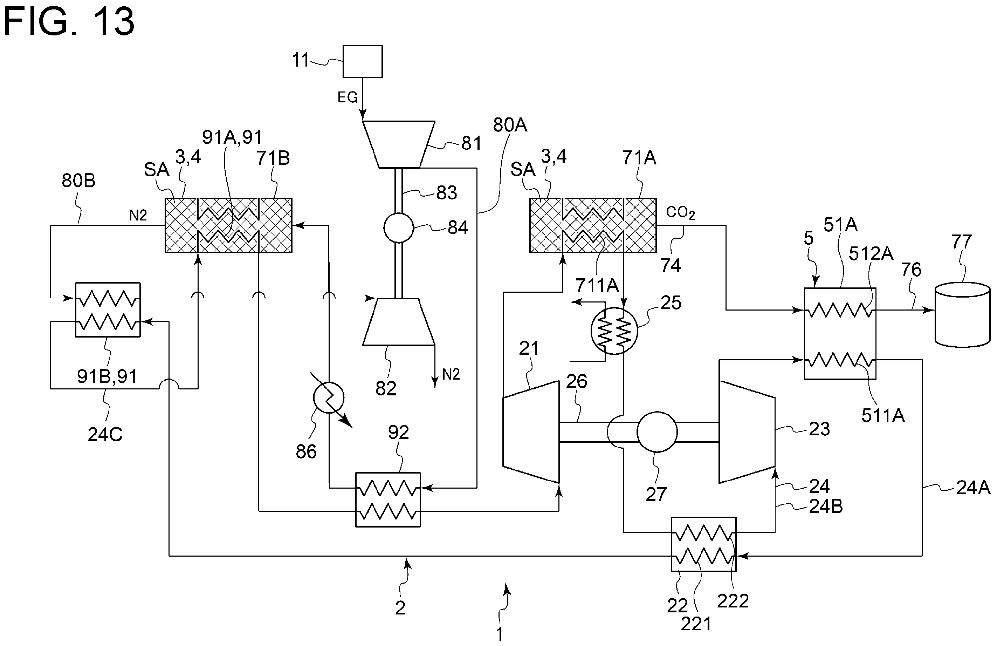

In some embodiments, as shown in FIGS. 11 and 13, the preheater 91 includes the above-described first preheater 91A and the above-described second preheater 91B. In the illustrated embodiment, the second preheater 91B is provided upstream of the first preheater 91A on the first heat medium supply line 24C.

According to the above-described configuration, the first heat medium introduced into the compressor 21 can be heated in multiple stages by the heat exchange in the first preheater 91A and the second preheater 91B, thereby efficiently raising the temperature of the first heat medium introduced into the compressor 21.

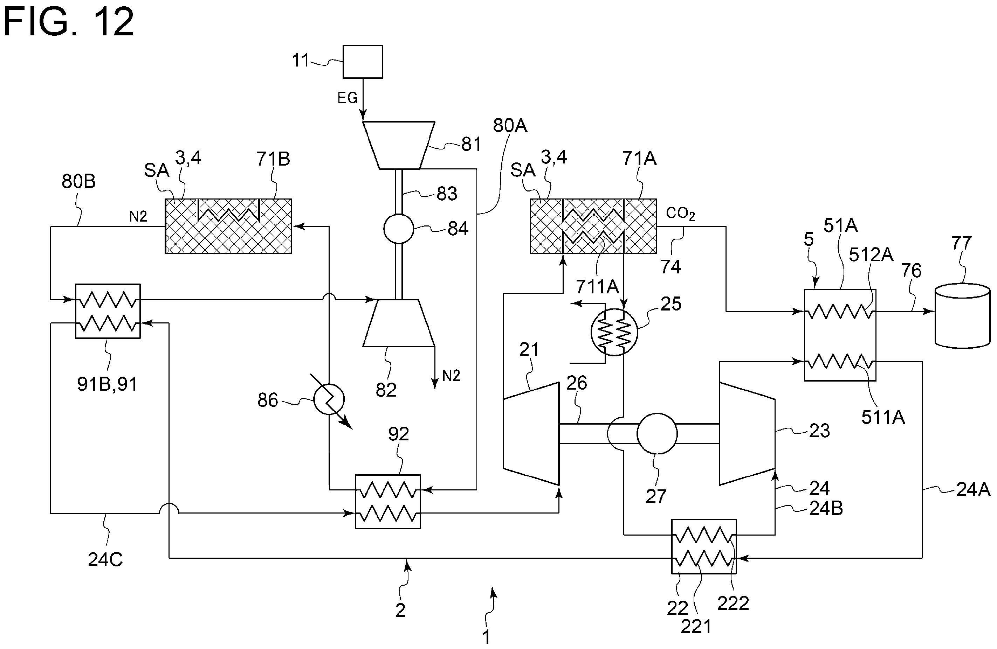

In some embodiments, as shown in FIGS. 12 and 13, the above-described carbon dioxide recovery system 1 further includes an auxiliary preheater 92 configured to transfer the thermal energy of the exhaust gas compressed in the exhaust gas compressor 81 and flowing through the exhaust gas introduction line 80A to the first heat medium flowing through the first heat medium supply line 24C. In the illustrated embodiment, the auxiliary preheater 92 includes a heat exchange section (pipes) through which the exhaust gas flows, which is provided between the exhaust gas compressor 81 and the exhaust gas precooler 86 of the exhaust gas introduction line 80A, and a heat exchange section (pipes) through which the first heat medium flows, which is provided between the preheater 91 and the compressor 21 of the first heat medium supply line 24C.

According to the above-described configuration, the exhaust gas compressed in the exhaust gas compressor 81 and flowing through the exhaust gas introduction line 80A becomes hotter than the adsorption heat of the adsorbent contained in the second casing 71B. The first heat medium introduced into the compressor 21 can be heated by the exhaust gas, which is hotter than the adsorption heat, through the heat exchange in the auxiliary preheater 92. In this way, the temperature of the first heat medium introduced into the compressor 21 can be raised efficiently. In addition, the exhaust gas flowing through the exhaust gas introduction line 80A can be cooled through the heat exchange in the auxiliary preheater 92, improving the adsorbent adsorption efficiency in the second casing 71B.

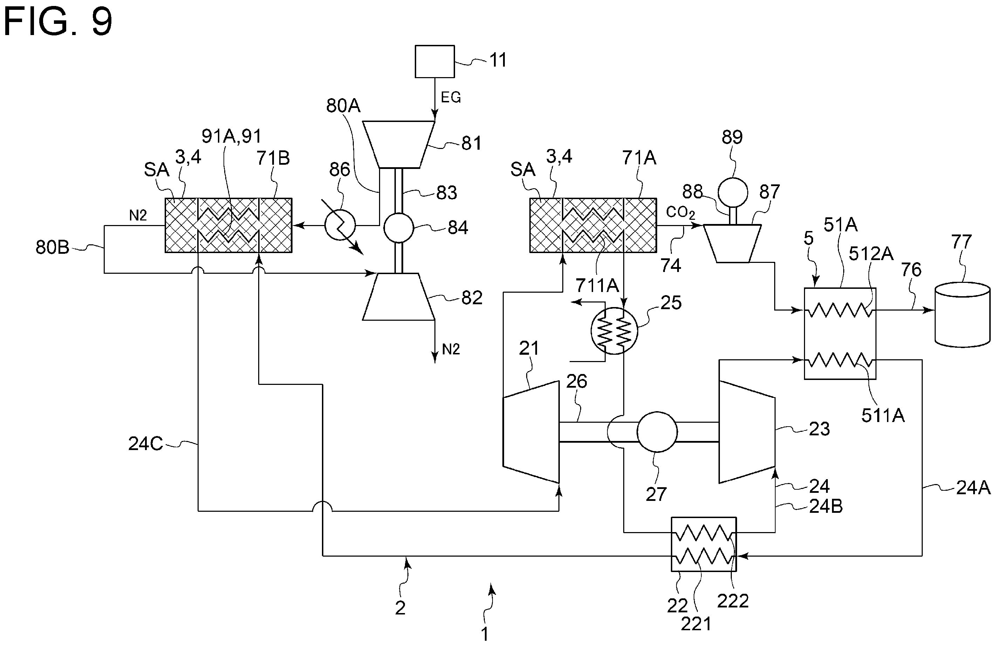

In some embodiments, as shown in FIG. 9, the carbon dioxide recovery system 1 described above further includes a vacuum compressor 87 provided in the carbon dioxide gas discharge line 74 for discharging carbon dioxide gas from the first casing 71A. In the illustrated embodiment, the carbon dioxide recovery system 1 further includes an electric motor 89 configured to generate a driving force for driving the vacuum compressor 87. The vacuum compressor 87 includes an electric compressor to which an output shaft 88 of the electric motor 89 is connected and configured to be driven by the electric motor 89 to compress (suck) the carbon dioxide gas.

According to the above-described configuration, the internal pressure of the first casing 71A can be reduced by driving the vacuum compressor 87, thereby improving the efficiency of separation of the carbon dioxide gas from the adsorbent contained in the first casing 71A. The above-mentioned vacuum compressor 87 may be mounted on the carbon dioxide recovery system 1 shown in FIGS. 10 to 13.

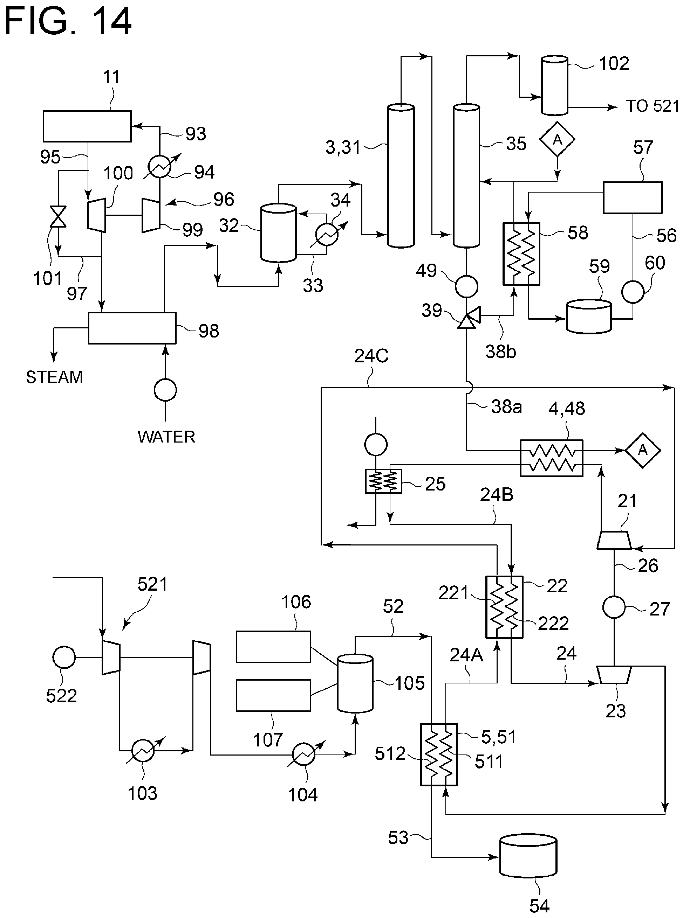

In some embodiments, as shown in, for example, FIGS. 14 to 20, the separator 4 includes a first absorption liquid circulation line 38a (absorption liquid line) and a heater 48. A pump 49 is provided in the first absorption liquid circulation line 38a, and the first absorption liquid circulation line 38a is configured to extract the absorption liquid that has absorbed carbon dioxide and is stored inside the regeneration tower 35 from the regeneration tower 35 by the pump 49 and then return it to the regeneration tower 35. The first absorption liquid circulation line 38a is configured to carry the absorption liquid that has absorbed carbon dioxide contained in the exhaust gas of the combustion device 11. The heater 48 is configured to transfer the thermal energy of the first heat medium flowing between the compressor 21 and the heat exchanger 22 in the compressed gas line 24B to the absorption liquid flowing through the first absorption liquid circulation line 38a.

The heater 48 is configured as a heat exchanger that performs heat exchange between the first heat medium introduced into the heater 48 in the compressed gas line 24B and the absorption liquid flowing through the first absorption liquid circulation line 38a. By the heat exchange in the heater 48, the absorption liquid flowing through the first absorption liquid circulation line 38a is heated, and the first heat medium introduced into the heater 48 from the compressed gas line 24B is cooled. The absorption liquid heated in the heater 48 is guided to the regeneration tower 35 via the first absorption liquid circulation line 38a, whereby the absorption liquid inside the regeneration tower 35 is heated and the carbon dioxide gas absorbed in the absorption liquid is separated.

According to the above-described configuration, the amount and temperature of heat supplied to the absorption liquid can be freely adjusted by changing the compression ratio of the compressor 21 of the liquefaction cycle. For example, when the cost of electricity is cheaper than the cost of fuel for the boiler 57 described below, the amount of heat supplied to the absorption liquid can be adjusted by increasing the compression ratio of the compressor 21 to reduce the load on the boiler 47. In addition, even if the compression ratio of the compressor 21 of the liquefaction cycle is changed, it is only necessary to increase the pressure resistance performance within the liquefaction cycle system, so that the feasibility of the facility can be ensured at a relatively low cost. In addition, compared to the configurations shown in FIGS. 1 to 6, and the like, there is no need to provide the second heat medium supply line 42, so the configuration can be simplified. In addition, compared to the case where steam is used as the second heat medium in the configurations shown in FIGS. 1 to 6, and the like, there is no need to generate steam, so the degree of freedom regarding the operating conditions of the compressor 21 can be increased.

In some embodiments, as shown in, for example, FIGS. 14 to 20, the separator 4 includes a second absorption liquid circulation line 38b (absorption liquid line), a circulation line 56, a boiler 57, a heater 58, a condenser 59, and a pump 60. The boiler 57, the heater 58, the condenser 59, and the pump 60 are provided in the circulation line 56, and are arranged in this order from the upstream side in the flow direction of the water or steam flowing through the circulation line 56.

The second absorption liquid circulation line 38b is configured to branch from the first absorption liquid circulation line 38a at a position between the heater 48 and the pump 49 in the first absorption liquid circulation line 38a, and to merge with the first absorption liquid circulation line 38a downstream of the heater 48 in the first absorption liquid circulation line 38a. The second absorption liquid circulation line 38b is configured to extract the absorption liquid that has absorbed carbon dioxide and is stored inside the regeneration tower 35 from the regeneration tower 35 by the pump 49, and then return it to the regeneration tower 35. The second absorption liquid circulation line 38b is configured to carry the absorption liquid that has absorbed carbon dioxide contained in the exhaust gas of the combustion device 11. A distribution valve 39 (distribution device) is provided at the branch point of the first absorption liquid circulation line 38a and the second absorption liquid circulation line 38b, and the flow rate of the absorption liquid to be distributed to the heater 48 and the flow rate of the absorption liquid to be distributed to the heater 58 for the absorption liquid extracted from the regeneration tower 35 by the first absorption liquid circulation line 38a can be adjusted by the distribution valve 39.

The boiler 57 generates steam by burning fuel and heating water. The heater 58 is configured to transfer the thermal energy of the steam generated in the boiler 57 and flowing through the circulation line 56 to the absorption liquid (the absorption liquid that has absorbed carbon dioxide and is extracted from the regeneration tower 35) flowing through the second absorption liquid circulation line 38b.

The heater 58 is configured as a heat exchanger that performs heat exchange between the steam introduced into the heater 58 from the circulation line 56 and the absorption liquid flowing through the second absorption liquid circulation line 38b. By the heat exchange in the heater 58, the absorption liquid flowing through the second absorption liquid circulation line 38b is heated, and the steam introduced into the heater 58 is cooled. The absorption liquid heated in the heater 58 is introduced into the regeneration tower 35 through the second absorption liquid circulation line 38b, so that the absorption liquid inside the regeneration tower 35 is heated and the carbon dioxide gas absorbed in the absorption liquid is separated.

In some embodiments, for example as shown in FIGS. 14 to 21, the carbon dioxide recovery system 1 includes an intake line 93, an air cooler 94, an exhaust gas line 95, an engine-mounted turbocharger 96, a surplus exhaust gas line 97, and an exhaust heat recovery steam boiler 98.

In the embodiment shown in FIGS. 14 to 20, the combustion device 11 is an engine, and the intake line 93 is configured to supply air compressed by a compressor 99 of the engine-mounted turbocharger 96 to the combustion device 11. The air cooler 94 is provided in the intake line 93 and configured to cool the air supplied to the combustion device 11. The exhaust gas line 95 is configured to supply the exhaust gas of the combustion device 11 to the absorption tower 31 via the turbine 100 of the engine-mounted turbocharger 96, the exhaust heat recovery steam boiler 98, and the cooling tower 32 (scrubbing tower).

The surplus exhaust gas line 97 is configured to branch from the upstream of the turbine 100 in the exhaust gas line 95, bypass the turbine 100, and connect to the downstream side of the turbine 100 in the exhaust gas line 95. A bypass valve 101 is provided in the surplus exhaust gas line 97. The exhaust gas of the combustion device 11 that has passed through the turbine 100 or the surplus exhaust gas line 97 is supplied to the exhaust heat recovery steam boiler 98, where water is heated to generate steam. The exhaust gas of the combustion device 11 that has exited the exhaust heat recovery steam boiler 98 is supplied to the above-described cooling tower 32 through the exhaust gas line 95.

In some embodiments, as shown in FIGS. 14 to 20, the carbon dioxide recovery system 1 includes a carbon dioxide separation device 102 in the gas line 52, for example, at a position between the regeneration tower 35 and the compressor 521. The carbon dioxide separation device 102 is configured to remove moisture from the gas containing the carbon dioxide that has exited the regeneration tower 35. In the embodiment shown in FIGS. 14 to 20, the gas having passed through the carbon dioxide separation device 102 in the gas line 52 (for example, gas containing 90 vol% or more of carbon dioxide gas) is supplied to the above-described compressor 521 and pressurized. In the embodiment shown in FIG. 14 to 20, the compressor 521 is a two-stage compressor, and a cooler 103 that cools the gas containing the carbon dioxide that has passed through the first-stage compressor is provided between the first-stage compressor and the second-stage compressor in the gas line 52.

In the embodiment shown in FIGS. 14 to 20, the carbon dioxide recovery system 1 is provided with a cooler 104 and a dehumidification tower 105 (dehumidifying device) at a position downstream of the compressor 521 and upstream of the liquefier 5 (upstream of the heat exchanger 51) in the gas line 52. The cooler 104 may be, for example, a water-cooled cooler, and is configured to cool the gas compressed by the compressor 521. The dehumidification tower 105 is configured to remove moisture contained in the gas flowing through the gas line 52. In the illustrated embodiment, an adsorbent that adsorbs moisture is provided inside the dehumidification tower 105, and a dehumidifying heater 106 (heater) that heats the adsorbent and a dehumidifying blower 107 that supplies dry gas to the adsorbent are provided to separate moisture from the adsorbent and restore the performance of adsorbing moisture to the adsorbent.

According to the knowledge of the inventors of the present application, the gas discharged from the regeneration tower 35 to the gas line 52 contains a certain amount of moisture, and when this moisture is supplied to the heat exchanger 51 of the liquefier 5, this moisture turns to ice in the heat exchanger 51, reducing the efficiency of heat exchange in the heat exchanger 51. Therefore, as described above, by removing the moisture contained in the gas flowing through the gas line 52 using each of the carbon dioxide separation device 102 and the dehumidification tower 105, it is possible to suppress the generation of ice in the heat exchanger 51 and increase the efficiency of heat exchange between the first heat medium and the carbon dioxide gas in the heat exchanger 51.

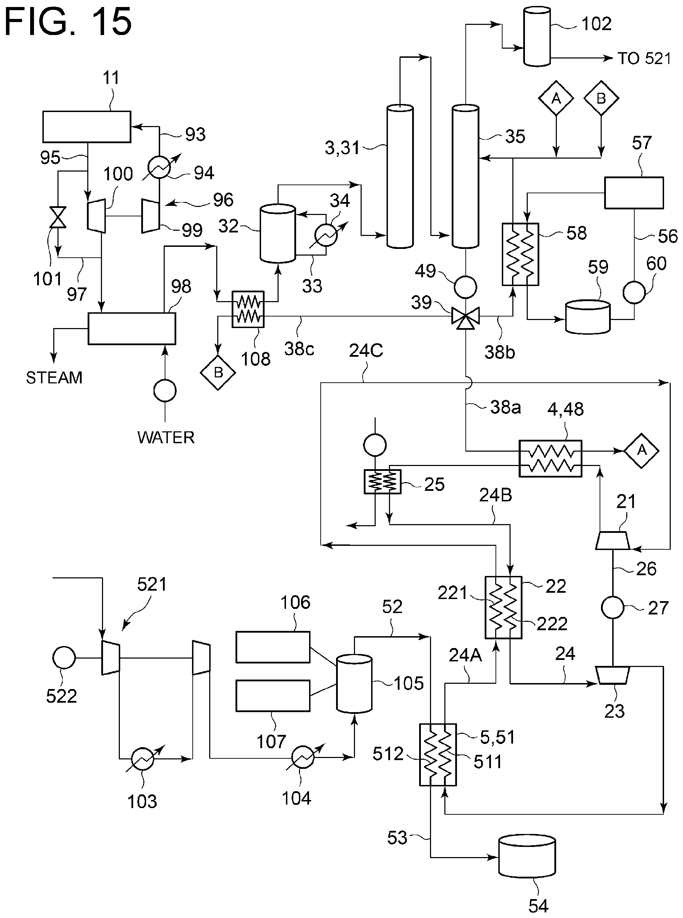

In some embodiments, for example as shown in FIGS. 15 and 17 to 20, the separator 4 includes a third absorption liquid circulation line 38c and a heater 108.

The third absorption liquid circulation line 38c is configured to branch from the first absorption liquid circulation line 38a at a position between the heater 48 and the pump 49 in the first absorption liquid circulation line 38a, and merge with the first absorption liquid circulation line 38a downstream of the heater 48 in the first absorption liquid circulation line 38a. The third absorption liquid circulation line 38c is configured to return the absorption liquid that has absorbed carbon dioxide and is stored inside the regeneration tower 35 to the regeneration tower 35 after being extracted from the regeneration tower 35 by the pump 49. The third absorption liquid circulation line 38c is configured to carry the absorption liquid that has absorbed carbon dioxide contained in the exhaust gas from the combustion device 11. A distribution valve 39 (distribution device) is provided at the branch point of the third absorption liquid circulation line 38c and the first absorption liquid circulation line 38a (the same position as the branch point of the second absorption liquid circulation line 38b and the third absorption liquid circulation line 38c in the illustrated exemplary embodiment), and the flow rate of the absorption liquid distributed to the heater 48, the flow rate of the absorption liquid distributed to the heater 58, and the flow rate of the absorption liquid distributed to the heater 108 for the absorption liquid extracted from the regeneration tower 35 by the first absorption liquid circulation line 38a can be adjusted by the distribution valve 39.

The heater 108 is configured to transfer the thermal energy of the exhaust gas discharged from the combustion device 11 (in the illustrated exemplary embodiment, the exhaust gas flowing between the exhaust heat recovery steam boiler 98 and the cooling tower 32 in the exhaust gas line 95) to the absorption liquid flowing through the absorption liquid third line. The heater 108 is configured as a heat exchanger that performs heat exchange between the exhaust gas introduced into the heater 108 and the absorption liquid flowing through the third absorption liquid circulation line 38c. By the heat exchange in the heater 108, the absorption liquid flowing through the third absorption liquid circulation line 38c is heated, and the exhaust gas introduced into the heater 108 is cooled. The absorption liquid heated in the heater 108 is guided to the regeneration tower 35 through the third absorption liquid circulation line 38c, whereby the absorption liquid inside the regeneration tower 35 is heated and the carbon dioxide gas absorbed in the absorption liquid is separated.

According to the above-described configuration, the heater 108 can separate carbon dioxide from the absorption liquid using the thermal energy of the exhaust gas from the combustion device 11 to regenerate the absorption liquid. In addition, the load on the boiler 57 can be reduced compared to the embodiment shown in FIG. 14. In addition, when the exhaust heat recovery steam boiler 98 is not provided, the heater 108 can use a higher-temperature exhaust gas to regenerate the absorption liquid, and the load on the boiler 57 can be further reduced.

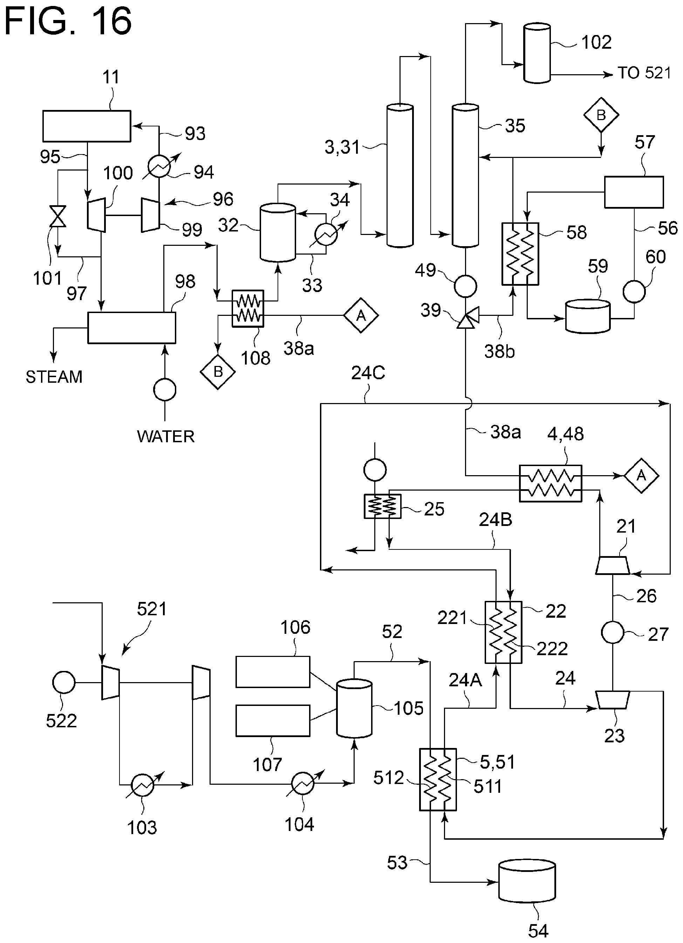

In some embodiments, for example as shown in FIG. 16, the heater 48 and the heater 106 may be provided in series in the first absorption liquid circulation line 38a, and the heater 108 may be provided, for example, downstream of the heater 48 in the first absorption liquid circulation line 38a. In this case, the absorption liquid flowing through the first absorption liquid circulation line 38a is heated by the heater 48 through heat exchange with the first heat medium flowing through the compressed gas line 24B, and is then further heated by the heater 108 through the thermal energy of the exhaust gas flowing through the exhaust gas line 95.

For this reason, even if the heater 48 alone cannot raise the temperature of the absorption liquid flowing through the first absorption liquid circulation line 38a to a temperature required for separating carbon dioxide (for example, about 120°C when the absorption liquid is an amine liquid), for example, when the compressor 21 is operated at a low pressure ratio, the absorption liquid flowing through the first absorption liquid circulation line 38a can be further heated by the heater 108 downstream of the heater 38, and it becomes easy to raise the temperature of the absorption liquid flowing through the first absorption liquid circulation line 38a to a temperature required for separating carbon dioxide. Therefore, even when for example, the compressor 21 is operated at a low pressure ratio, economical operation is possible without wasting heat generated in the liquefaction cycle.

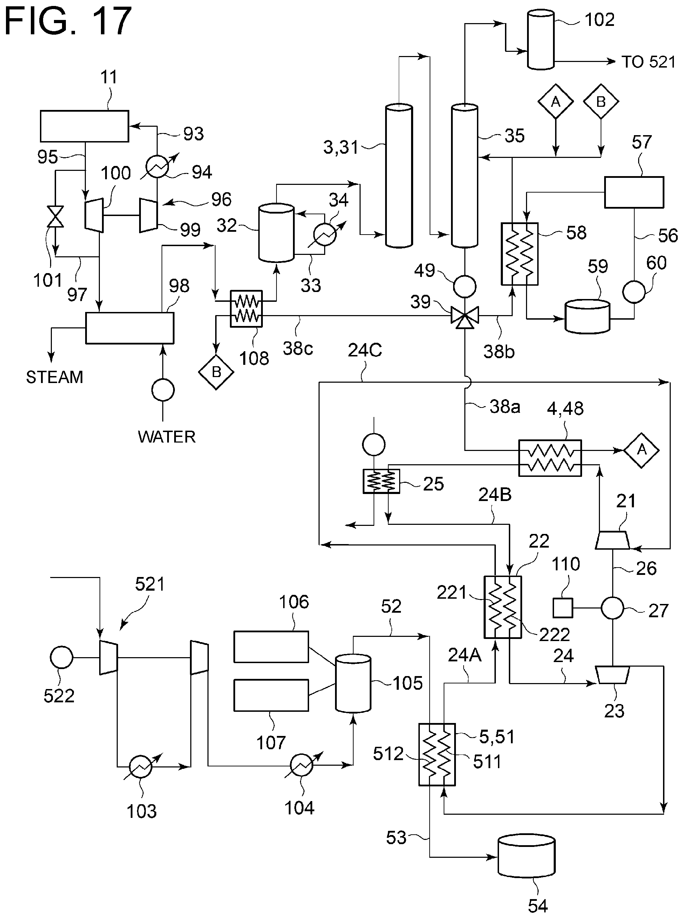

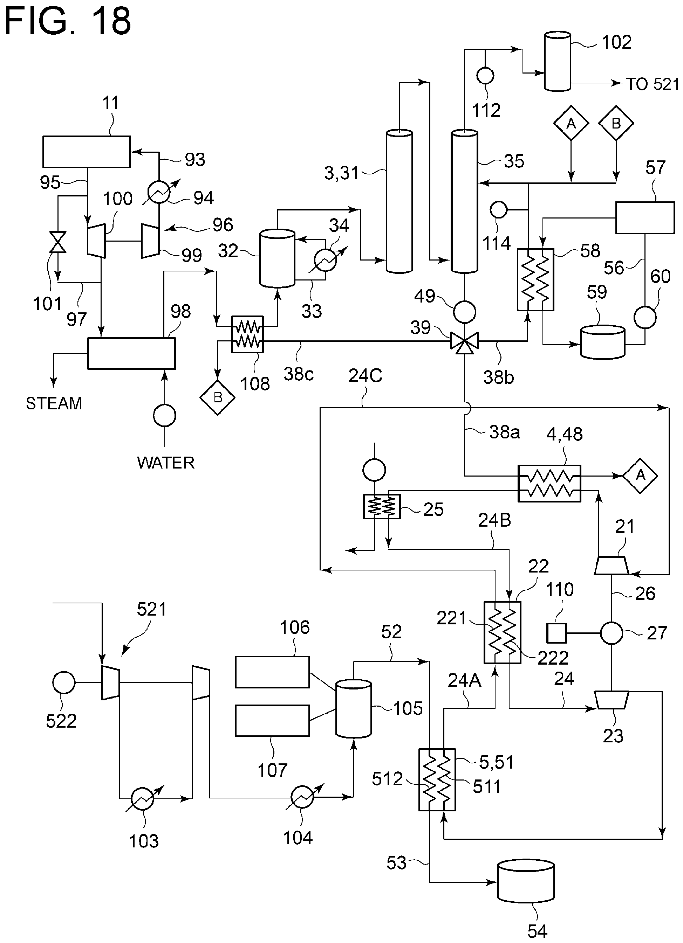

In some embodiments, for example, as shown in FIGS. 17 and 18, the carbon dioxide recovery system 1 includes a control device 110 configured to control the electric motor 27 of the compressor 21.

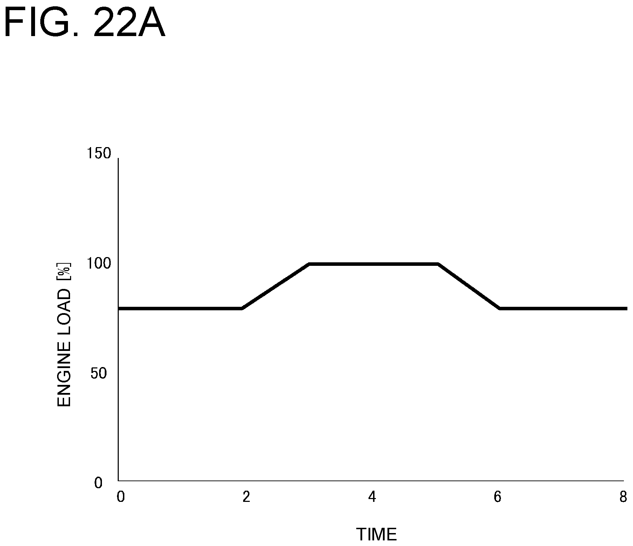

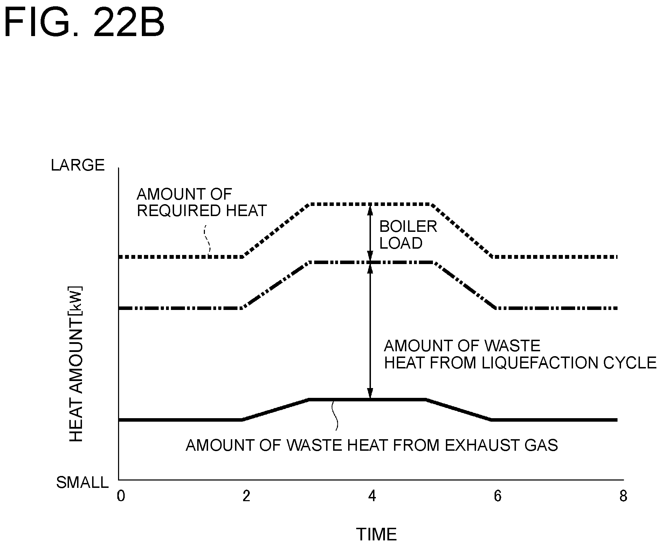

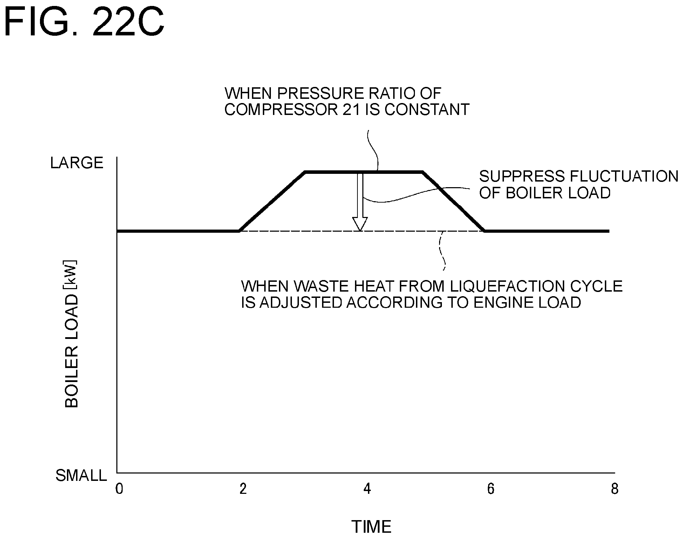

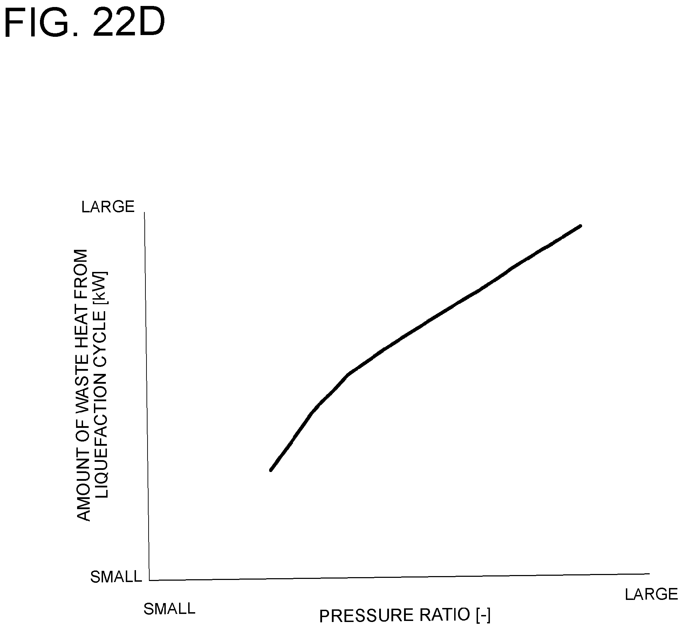

Here, an example of control of the control device 110 will be described with reference to FIGS. 22A to 22D. FIG. 22A is a diagram showing the transition of the load on the engine as the combustion device 11. FIG. 22B is a diagram showing the transition of the required heat amount, which is the amount of heat required for regenerating the absorption liquid, and the load on the boiler 57, the amount of exhaust heat derived from the liquefaction cycle, and the amount of exhaust heat derived from the exhaust gas, which are included in the required heat amount. FIG. 22C is a diagram for explaining the transition of the boiler load. FIG. 22D is a diagram showing the relationship between the pressure ratio of the compressor 21 in the liquefaction cycle and the amount of exhaust heat derived from the liquefaction cycle. Note that the horizontal axis in FIG. 22A to FIG. 22C indicates the same time range. In addition, the amount of exhaust heat derived from the liquefaction cycle means the amount of exhaust heat that can be recovered in the absorption liquid by the heater 48, and the amount of exhaust heat derived from the exhaust gas means the amount of exhaust heat that can be recovered in the absorption liquid by the heater 108.

In some embodiments, as shown in FIG. 22A and FIG. 22B, the control device 110 may control the electric motor 27 to increase the pressure ratio of the compressor 21 as the load on the engine as the combustion device 11 increases. As the engine load increases, the flow rate of the exhaust gas from the engine also increases, so that when the engine load fluctuates as shown in FIG. 22A, the required heat amount, which is the heat amount required for regenerating the absorption liquid that absorbs carbon dioxide in the exhaust gas, and the exhaust heat amount derived from the exhaust gas fluctuate according to the engine load as shown in FIG. 22B. On the other hand, as shown in FIG. 22D, the exhaust heat amount derived from the liquefaction cycle increases as the pressure ratio of the compressor 21 increases.

For this reason, by adjusting the exhaust heat from the liquefaction cycle according to the load on the engine (that is, by controlling the electric motor 27 so as to increase the pressure ratio of the compressor 21 as the load on the engine increases), as shown in FIG. 22C, the fluctuation of the load on the boiler 57 can be suppressed, and the operation cost for adjusting the operation of the boiler 57 can be reduced.

The control device 110 may control the pressure ratio of the compressor 21 by controlling the rotation speed of the electric motor 27, and may increase the output of the electric motor 27 as the load on the engine increases. In addition, for example, when the compressor 21 includes multiple electric compressors arranged in parallel, the control device 110 may control the pressure ratio of the compressor 21 by controlling the output of the multiple electric compressors for each electric compressor.

In some embodiments, for example, in the carbon dioxide recovery system 1 shown in FIG. 17, the control device 110 may adjust the pressure ratio of the compressor 21 based on information on the unit price of electricity and information on the unit price of fuel so that the overall running cost of the carbon dioxide recovery system 1 is reduced. In this case, the control device 110 refers to information indicating the current unit price of electricity and information indicating the unit price of fuel obtained, for example, via the Internet, and increases the pressure ratio of the compressor 21 during times when the unit price of electricity is relatively cheap, such as at night, to reduce the load on the boiler 57, thereby reducing the overall running cost of the carbon dioxide recovery system 1.

In some embodiments, as shown in FIG. 18, for example, the carbon dioxide recovery system 1 includes a flowmeter 112 and a thermometer 114. In the illustrated exemplary embodiment, the flowmeter 112 is configured to measure the flow rate of the gas flowing through the gas line 52 at a position between the regeneration tower 35 and the carbon dioxide separation device 102 in the gas line 52. The thermometer 114 is configured to measure the temperature of the absorption liquid flowing through the first absorption liquid circulation line 38a at a position downstream of the heater 58 in the first absorption liquid circulation line 38a.

In the embodiment shown in FIG. 18, the control device 110 may control the pressure ratio of the compressor 21 based on at least one of the flow rate of the gas flowing through the gas line 52 measured by the flowmeter 112 and the temperature of the absorption liquid measured by the thermometer 114 (the temperature of the absorption liquid at a position downstream of the heater 58 in the first absorption liquid circulation line 38a).

The control device 110 may feedback-control the pressure ratio of the compressor 21 based on the deviation between the gas flow rate measured by the flowmeter 112 and the target flow rate, for example, and may control the electric motor 27 so that the pressure ratio of the compressor 21 increases as the value obtained by subtracting the gas flow rate measured by the flowmeter 112 from the target flow rate increases.

The control device 110 may set the target temperature of the absorption liquid to a higher temperature as the value obtained by subtracting the gas flow rate measured by the flowmeter 112 from the target flow rate increases, and may feedback-control the pressure ratio of the compressor 21 based on the deviation between the target temperature of the absorption liquid and the temperature of the absorption liquid measured by the thermometer 114. In this case, the electric motor 27 may be controlled so that the pressure ratio of the compressor 21 increases as the value obtained by subtracting the temperature of the absorption liquid measured by the thermometer 114 from the target temperature of the absorption liquid increases.

The regeneration characteristics of the absorption liquid, such as an amine liquid, change due to deterioration over time. Specifically, as the liquid deteriorates, the amount of heat required for regeneration increases, or the threshold temperature required for regeneration increases, meaning that the liquid must be heated to a higher temperature to separate carbon dioxide gas. In addition, the above-described characteristic changes may occur when the absorption liquid is changed. Regarding such changes in the characteristics of the absorption liquid, if the amount of heat required for regenerating the absorption liquid is provided by the boiler 57 alone, the degree of freedom in operating the boiler 57 is low and it is difficult to follow the changes in the characteristics of the absorption liquid. However, as described above, by controlling the pressure ratio of the compressor 21 based on at least one of the flow rate of the gas flowing through the gas line 52 measured by the flowmeter 112 and the temperature of the absorption liquid measured by the thermometer 114 (the temperature of the absorption liquid at a position downstream of the heater 58 in the first absorption liquid circulation line 38a), the absorption liquid can be regenerated with the optimal amount of heat and/or temperature so as to follow the changes in the characteristics of the absorption liquid due to the deterioration of the absorption liquid over time, and the replacement life of the absorption liquid can be extended to reduce running costs.

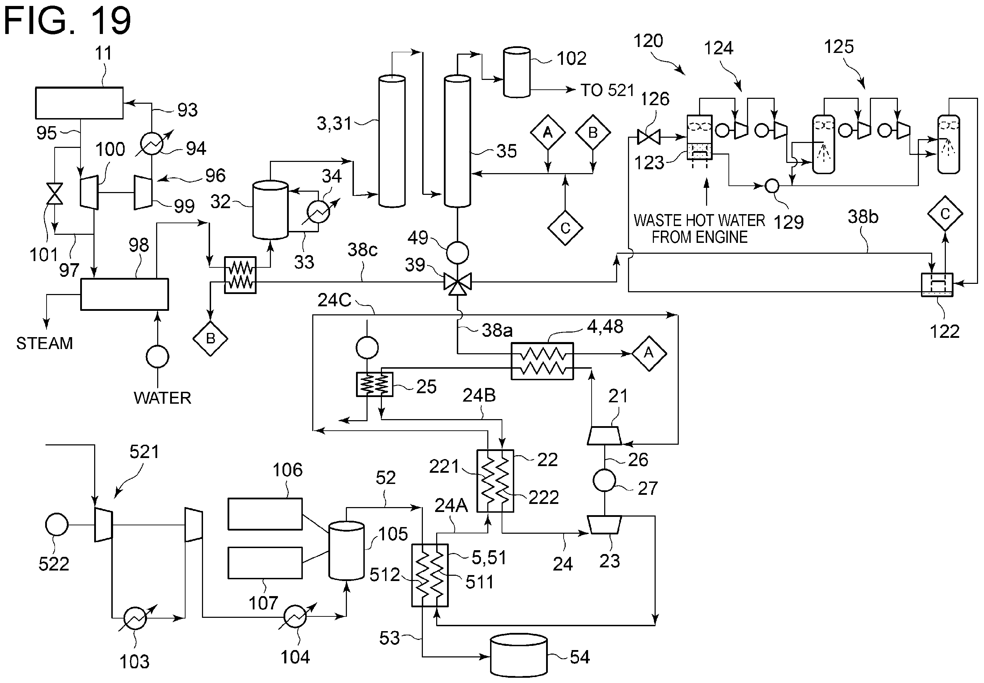

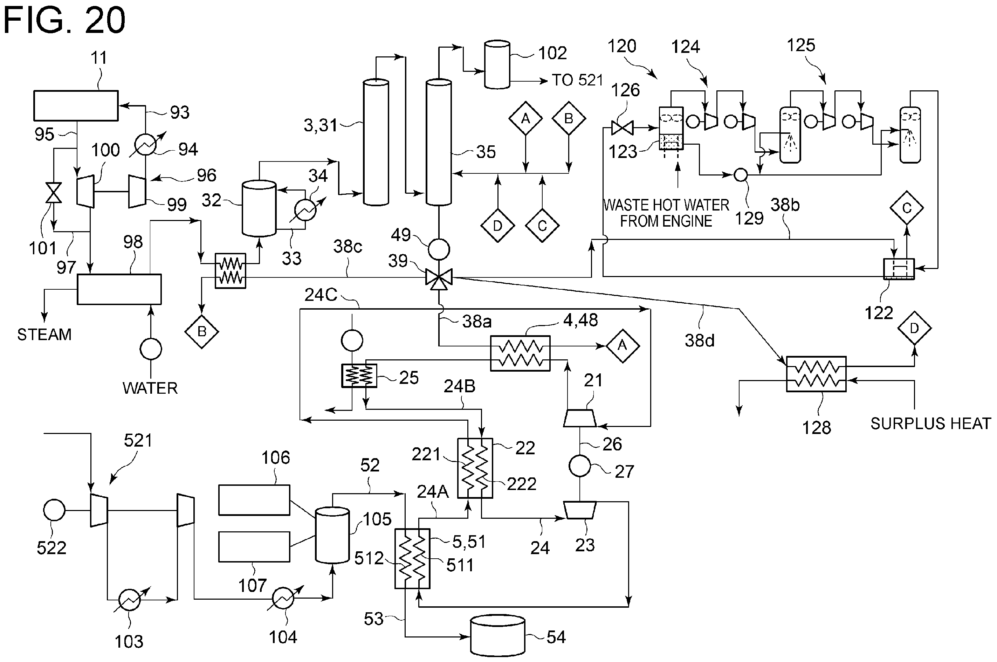

In some embodiments, for example, as shown in FIGS. 19 and 20, the separator 4 includes a second absorption liquid circulation line 38b, a steam compressor 120, and a heater 122.

The second absorption liquid circulation line 38b is configured to branch from the first absorption liquid circulation line 38a at a position between the heater 48 and the pump 49 in the first absorption liquid circulation line 38a, and merge with the first absorption liquid circulation line 38a downstream of the heater 48 in the first absorption liquid circulation line 38a. The second absorption liquid circulation line 38b is configured to return the absorption liquid that has absorbed carbon dioxide and is stored inside the regeneration tower 35 to the regeneration tower 35 after being extracted from the regeneration tower 35 by the pump 49. The second absorption liquid circulation line 38b is configured to carry the absorption liquid that has absorbed carbon dioxide contained in the exhaust gas from the combustion device 11.

A distribution valve 39 (distribution device) is provided at the branch point of the second absorption liquid circulation line 38b and the first absorption liquid circulation line 38a (the same position as the branch point of the third absorption liquid circulation line 38c and the first absorption liquid circulation line 38a in the illustrated exemplary embodiment), and the flow rate of the absorption liquid to be distributed to the heater 48, the flow rate of the absorption liquid to be distributed to the heater 108, and the flow rate of the absorption liquid to be distributed to the heater 122 for the absorption liquid extracted from the regeneration tower 35 by the first absorption liquid circulation line 38a can be adjusted by the distribution valve 39.

The exemplary steam compressor 120 shown in FIGS. 19 and 20 is configured to supply waste hot water (cooling water after being used to cool the engine) discharged from the engine as the combustion device 11 to a water supply tank 123, and to generate high-pressure steam by pressurizing the saturated steam in the water supply tank 123 with a low-pressure compressor 124 and a high-pressure compressor 125. The high-pressure steam generated by the high-pressure compressor 125 is cooled as necessary with the cooling water supplied from the water supply tank 123 by the pump 129 and then supplied to the heater 122.

The heater 122 is configured to transfer the thermal energy of the steam pressurized by the steam compressor 120 to the absorption liquid flowing through the second absorption liquid circulation line 38b. The heater 122 is configured as a heat exchanger that performs heat exchange between the steam introduced into the heater 122 and the absorption liquid flowing through the second absorption liquid circulation line 38b. By the heat exchange in the heater 122, the absorption liquid flowing through the second absorption liquid circulation line 38b is heated, and the steam introduced into the heater 122 is cooled. The absorption liquid heated in the heater 122 is guided to the regeneration tower 35 through the second absorption liquid circulation line 38b, whereby the absorption liquid inside the regeneration tower 35 is heated and the carbon dioxide gas absorbed in the absorption liquid is separated. The steam introduced into the heater 122 is cooled to become condensed water, which is then depressurized through the pressure reducing valve 126 and returned to the water supply tank 123.

According to the above-described configuration, by using the steam compressor 120 with a high COP (coefficient of performance), the refrigeration cycle can be driven at a lower running cost than when the heat required for regenerating the absorption liquid is provided by a boiler. In addition, since the installation of the above-described boiler 57 is not required, fuel supply for carbon dioxide recovery is not required.

In some embodiments, as shown in FIG. 20, for example, the carbon dioxide recovery system 1 includes a fourth absorption liquid circulation line 38d and a heater 128.

The fourth absorption liquid circulation line 38d is configured to branch from the first absorption liquid circulation line 38a at a position between the heater 48 and the pump 49 in the first absorption liquid circulation line 38a, and to merge with the first absorption liquid circulation line 38a downstream of the heater 48 in the first absorption liquid circulation line 38a. The fourth absorption liquid circulation line 38d is configured to extract the absorption liquid that has absorbed carbon dioxide and is stored inside the regeneration tower 35 from the regeneration tower 35 by the pump 49, and then return it to the regeneration tower 35. The fourth absorption liquid circulation line 38d is configured to carry the absorption liquid that has absorbed carbon dioxide contained in the exhaust gas of the combustion device 11. A distribution valve 39 (distribution device) is provided at the branch point of the fourth absorption liquid circulation line 38d and the first absorption liquid circulation line 38a (the same position as the branch point of the second absorption liquid circulation line 38b and the third absorption liquid circulation line 38c in the illustrated exemplary embodiment), and the flow rate of the absorption liquid to be distributed to the heater 48, the flow rate of the absorption liquid to be distributed to the heater 108, the flow rate of the absorption liquid to be distributed to the heater 122, and the flow rate of the absorption liquid to be distributed to the heater 128 for the absorption liquid extracted from the regeneration tower 35 by the first absorption liquid circulation line 38a can be adjusted by the distribution valve 39.

The heater 128 is configured to transfer surplus heat (unused waste heat of the plant) in the plant equipped with the carbon dioxide recovery system 1 to the absorption liquid flowing through the fourth absorption liquid circulation line 38d. The heater 128 is configured as a heat exchanger that performs heat exchange between a heat medium carrying the surplus heat introduced into the heater 128 and the absorption liquid flowing through the fourth absorption liquid circulation line 38d. By the heat exchange in the heater 128, the absorption liquid flowing through the fourth absorption liquid circulation line 38d is heated, and the heat medium introduced into the heater 128 is cooled. The absorption liquid heated in the heater 128 is guided to the regeneration tower 35 through the fourth absorption liquid circulation line 38d, whereby the absorption liquid in the regeneration tower 35 is heated, and the carbon dioxide gas absorbed in the absorption liquid is separated.

According to the above-described configuration, when high-quality surplus heat of, for example, about 120°C is available in the plant equipped with the carbon dioxide recovery system 1, the surplus heat can be used to regenerate the absorption liquid. In the exemplary embodiment shown in FIG. 20, the required heat amount, which is the amount of heat required for regenerating the absorption liquid, is provided by the amount of heat supplied from four heating sources: the amount of waste heat from the exhaust gas, the amount of waste heat from the liquefaction cycle, the amount of surplus heat from the plant, and the amount of heat from the steam supplied from the steam compressor 120. Here, the amount of surplus heat from the plant varies greatly depending on the operating conditions of the plant, so the sum of the amounts of heat supplied from the above-described four heating sources varies, and there is a risk of a shortage of the amount of heat required for regenerating the absorption liquid.

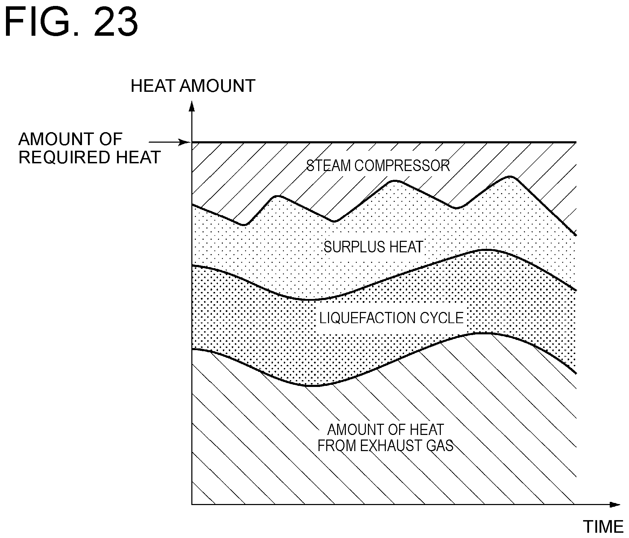

In this regard, in the embodiment shown in FIG. 20, the steam compressor 120 can arbitrarily adjust the amount of heat generated by adjusting the amount of power input. Thus, the steam compressor 120 can function to adjust the sum of the amounts of heat supplied from the above-described four heating sources. Specifically, as shown in FIG. 23, when the sum of the heat amounts of the heat supplied from the other three heating sources decreases, the load on the steam compressor 120 is increased, and when the sum of the heat amounts of the heat supplied from the other three heating sources increases, the load on the steam compressor 120 is decreased. In this way, the sum of the heat amounts of the heat supplied from the above-described four heating sources can be kept constant. Therefore, even if the surplus heat available in the plant, which fluctuates greatly, is utilized, the amount of heat supplied to the absorption liquid can be kept constant by adjusting the load on the steam compressor 120.

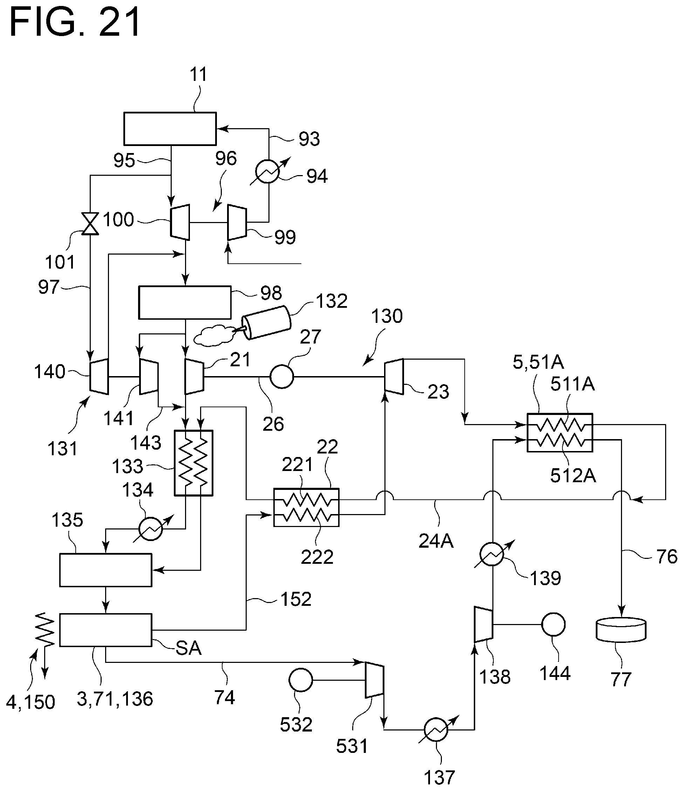

In some embodiments, for example, as shown in FIG. 21, the compressor 21, the electric motor 27, and the turbine as the expander 23 constitute an exhaust gas power recovery turbocharger 130. In the embodiment shown in FIG. 21, the carbon dioxide recovery system 1 includes a surplus exhaust gas power recovery turbocharger 131, a mist injection device 132, a dehumidifying regenerative heat exchanger 133, a cooler 134 and a dehumidification tower 135, an adsorption tower 136, a cooler 137, a carbon dioxide liquefaction compressor 138, and a cooler 139.

In the embodiment shown in FIG. 21, the combustion device 11 is an engine, and the intake line 93 is configured to supply air compressed by a compressor 99 of the engine-mounted turbocharger 96 to the combustion device 11. An air cooler 94 is provided in the intake line 93, and is configured to cool the air supplied to the combustion device 11. The exhaust gas line 95 is configured to supply the exhaust gas from the combustion device 11 to the adsorption tower 136 via the turbine 100 of the engine-mounted turbocharger 96, the exhaust heat recovery steam boiler 98, the compressor 21, the dehumidifying regenerative heat exchanger 133, the cooler 134, and the dehumidification tower 135 in this order.

The surplus exhaust gas line 97 is configured to branch from the upstream of the turbine 100 in the exhaust gas line 95, bypass the turbine 100, and connect to the downstream side of the turbine 100 in the exhaust gas line 95. A bypass valve 101 is provided in the surplus exhaust gas line 97. A turbine 140 of the surplus exhaust gas power recovery turbocharger 131 is provided downstream of the bypass valve 101 in the surplus exhaust gas line 97, and the exhaust gas from the combustion device 11 that has passed through the surplus exhaust gas line 97 is supplied to the exhaust heat recovery steam boiler 98 after driving the turbine 140. The exhaust gas from the combustion device 11 that has passed through the turbine 100 or the surplus exhaust gas line 97 is supplied to the exhaust heat recovery steam boiler 98, where water is heated to generate steam.

The carbon dioxide recovery system 1 shown in FIG. 21 includes a bypass line 143. One end of the bypass line 143 is connected to a position between the exhaust heat recovery steam boiler 98 and the compressor 21 in the exhaust gas line 95, and the other end of the bypass line 143 is connected to a position between the compressor 21 and the dehumidifying regenerative heat exchanger 133 in the exhaust gas line 95. The bypass line 143 is provided with the compressor 141 of the surplus exhaust gas power recovery turbocharger 131, and the exhaust gas from the combustion device 11 that has exited the exhaust heat recovery steam boiler 98 is supplied to the dehumidifying regenerative heat exchanger 133 through the compressor 21 of the exhaust gas line 95 or the compressor 141 of the bypass line 143.

The mist injection device 132 is configured to inject mist at the inlet of the compressor 21 in the exhaust gas line 95. In this way, the temperature rise at the outlet of the compressor 21 is suppressed, and the power of the compressor 21 is reduced.

The exhaust gas (heat medium containing nitrogen gas) pressurized by the compressor 21 or the compressor 141 is cooled in the dehumidifying regenerative heat exchanger 133 by heat exchange with a nitrogen-rich gas (described later) flowing through the expansion gas line 24A, and is further cooled in the cooler 134 (for example, a water-cooled heat exchanger) before being supplied to the dehumidification tower 135. Inside the dehumidification tower 135, a dehumidifying material (for example, alumina, silica gel, zeolite, MOF, and the like) that adsorbs moisture is provided, and the exhaust gas cooled by the dehumidifying regenerative heat exchanger 133 and the cooler 134 passes through the dehumidification tower 135, whereby moisture in the exhaust gas is removed by the dehumidifying material and supplied to the adsorption tower 136. In addition, low-temperature nitrogen gas (nitrogen-rich gas) is supplied to the dehumidification tower 135 from the expansion gas line 24A through the dehumidifying regenerative heat exchanger 133, and the nitrogen gas is used in the dehumidification tower 135 as a dry gas for drying the dehumidifying material. In this way, the need to separately prepare a dry gas for drying the dehumidifying material is eliminated, thereby reducing the lining cost of the carbon dioxide recovery system 1. In addition, the moisture injected into the exhaust gas by the mist injection device 132 is also removed in the dehumidification tower 135. Thus, it is possible to suppress the moisture from adversely affecting the operation of the adsorption tower 136 described below.

The adsorption tower 136 is configured to adsorb carbon dioxide contained in the exhaust gas discharged from the combustion device 11 to the adsorbent SA provided inside the adsorption tower 136, and in the embodiment shown in FIG. 21, the adsorption tower 136 constitutes the above-described carbon dioxide extraction device 3. In addition, the adsorption tower 136 is provided with a heater 150 for heating the adsorbent SA. The heater 150 functions as the separator 4 that uses exhaust heat from the combustion device 11 or the plant to heat the adsorbent SA and separate the carbon dioxide gas from the adsorbent SA. The heater 150 may be configured to heat the adsorbent SA using the thermal energy of the exhaust gas compressed in the compressor 21 or the compressor 141, for example, to separate the carbon dioxide gas from the adsorbent SA. By using exhaust heat (exhaust heat from the engine or the plant) that is higher in temperature than the adsorption heat in the heater 150, the load on a vacuum pump 531 is reduced. In addition, since the suction pressure of the vacuum pump 531 is in a low vacuum condition, the efficiency of the vacuum pump 531 is improved and the power of the vacuum pump 531 is further reduced.

The carbon dioxide gas (carbon dioxide-rich gas) separated from the exhaust gas in the adsorption tower 136 is supplied to the heat exchanger 51A of the liquefier 5 through the carbon dioxide gas discharge line 74. The vacuum pump 531 for sucking carbon dioxide gas from the permeation side of the adsorption tower 136 may be installed in the carbon dioxide gas discharge line 74. The vacuum pump 531 is connected to an electric motor 532 and configured to be driven by the electric motor 532. The carbon dioxide gas sucked from the permeation side of the adsorption tower 136 by the vacuum pump 531 flows through the carbon dioxide gas discharge line 74 toward the downstream side (the carbon dioxide gas side heat exchange section 512A side).

In the carbon dioxide recovery system 1 shown in FIG. 21, the cooler 137, the carbon dioxide liquefaction compressor 138, and the cooler 139 are provided in this order downstream of the vacuum pump 531 in the carbon dioxide gas discharge line 74, and the carbon dioxide gas flowing through the carbon dioxide gas discharge line 74 is cooled by the cooler 137 after leaving the vacuum pump 531, pressurized by the carbon dioxide liquefaction compressor 138 driven by an electric motor 144, and further cooled by the cooler 139 before being supplied to the carbon dioxide gas side heat exchange section 512A of the heat exchanger 51A of the liquefier 5. The carbon dioxide gas supplied to the carbon dioxide gas side heat exchange section 512A is cooled and liquefied by heat exchange with the low-temperature first heat medium (heat medium containing nitrogen gas in the embodiment shown in FIG. 21) flowing through the first heat medium side heat exchange section 511A. The carbon dioxide liquefied in the heat exchanger 51A is introduced into the storage tank 77 configured to store liquid carbon dioxide through the liquid carbon dioxide discharge line 76, and is stored in the storage tank 77.

The remaining nitrogen gas (nitrogen-rich gas) obtained by separating the carbon dioxide gas from the exhaust gas in the adsorption tower 136 is supplied to the heat exchanger 22 through a nitrogen gas discharge line 152.

The heat exchanger 22 is configured to perform heat exchange between the nitrogen-rich gas flowing through the expansion gas line 24A and the nitrogen-rich gas flowing through the nitrogen gas discharge line 152. The nitrogen-rich gas flowing through the expansion gas line 24A is expanded by the expander 23, and is therefore at a lower temperature than the nitrogen-rich gas flowing through the nitrogen gas discharge line 152. By the heat exchange in the heat exchanger 22, the nitrogen-rich gas flowing through the nitrogen gas discharge line 152 is cooled, and the nitrogen-rich gas flowing through the expansion gas line 24A is heated. In other words, the heat exchanger 22 includes the low-temperature side heat exchange section 221 provided in the expansion gas line 24A through which the nitrogen-rich gas flows, and the high-temperature side heat exchange section 222 provided in the nitrogen gas discharge line 152 through which the nitrogen-rich gas flows, and heat is transferred from the nitrogen-rich gas flowing in the high-temperature side heat exchange section 222 to the nitrogen-rich gas flowing in the low-temperature side heat exchange section 221.

The nitrogen-rich gas flowing through the nitrogen gas discharge line 152 is supplied to the expander 23 (turbine) through the high-temperature side heat exchange section 222 of the heat exchanger 22, and is expanded in the expander 23 to assist the drive of the compressor 21 as described above. The temperature of the nitrogen-rich gas is lowered by the expansion in the expander 23, and the low-temperature (for example, about -70°C) nitrogen-rich gas is supplied to the first heat medium side heat exchange section 511A of the heat exchanger 51A, and is used to cool (liquefy) the carbon dioxide gas flowing in the carbon dioxide gas side heat exchange section 512A as described above.

The nitrogen-rich gas leaving the first heat medium side heat exchange section 511A of the heat exchanger 51A is supplied to the low-temperature side heat exchange section 221 of the heat exchanger 22 through the expansion gas line 24A, and is used to cool the nitrogen-rich gas flowing through the high-temperature side heat exchange section 222 as described above. The nitrogen-rich gas leaving the low-temperature side heat exchange section 221 of the heat exchanger 22 is supplied to the dehumidifying regenerative heat exchanger 133 through the expansion gas line 24A, and is used in the dehumidifying regenerative heat exchanger 133 to cool the exhaust gas flowing through the exhaust gas line 95 as described above.

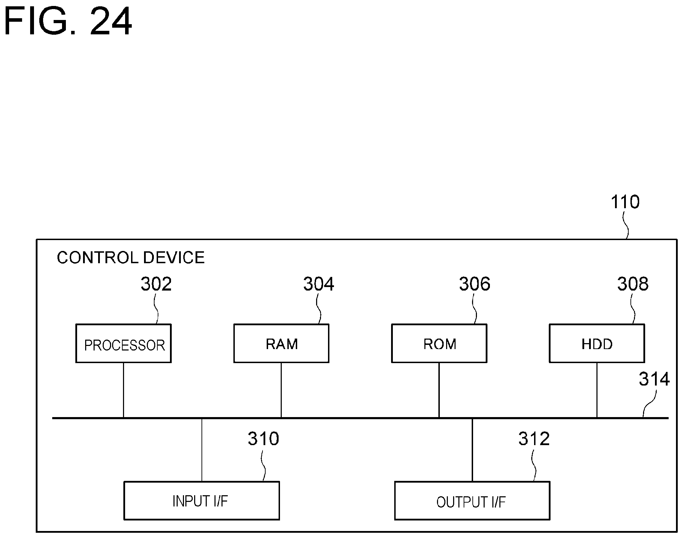

FIG. 24 is a diagram showing an example of the hardware configuration of the control device 110.

As shown in FIG. 24, the control device 110 includes, for example, a processor 302, a RAM (Random Access Memory) 304, a ROM (Read Only Memory) 306, an HDD (Hard Disk Drive) 308, an input I/F 310, and an output I/F 312, and is configured using a computer in which these are connected to each other via a bus 314. The hardware configuration of the control device 110 is not limited to the above, and may be configured by a combination of a control circuit and a storage device. The control device 110 is also configured by a computer executing a program that realizes each function of the control device 110. The functions of each part in the control device 110 are realized, for example, by loading a program held in the ROM 306 into the RAM 304 and executing it with the processor 302, and by reading and writing data in the RAM 304 and the ROM 306. The hardware that constitutes the control device 110 may be concentrated in one place, or may be distributed across multiple places.

The carbon dioxide recovery method according to some embodiments is a carbon dioxide recovery method for recovering carbon dioxide contained in the exhaust gas discharged from the combustion device 11 described above. The above-described carbon dioxide recovery method includes a carbon dioxide extraction step, a compression step, a cooling step, an expansion step, a separation step, and a liquefaction step. Some steps in the carbon dioxide recovery method may be performed by each device constituting the carbon dioxide recovery system 1 described above, or may be performed by devices not constituting the carbon dioxide recovery system 1 or manually.

In the above-described carbon dioxide extraction step, the carbon dioxide contained in the exhaust gas is absorbed in an absorption liquid, or the above-described carbon dioxide is adsorbed in an adsorbent. In the above-described compression step, the first heat medium is compressed by the compressor 21 of the refrigerator 2. In the above-described cooling step, the first heat medium compressed in the compressor 21 is cooled by the heat exchanger 22 of the refrigerator 2.

In the above-described expansion step, the first heat medium cooled in the heat exchanger 22 is expanded by the expander 23 of the refrigerator 2. In the above-described separation step, the carbon dioxide gas is separated from the absorption liquid or the adsorbent by the thermal energy of the first heat medium compressed in the compressor 21. In the above-described liquefaction step, the carbon dioxide gas separated from the absorption liquid or the adsorbent in the above-described separation step is liquefied by the cooling energy of the first heat medium expanded in the expander 23.

According to the above-described method, in the liquefaction step, the cooling energy of the first heat medium expanded in the expander 23 of the refrigerator 2 is used as a cooling source to liquefy the carbon dioxide gas separated from the absorption liquid or the adsorbent. In the separation step, the thermal energy of the first heat medium compressed in the compressor 21, which is the exhaust heat of the refrigerator 2, is used as a heating source to separate the carbon dioxide gas from the absorption liquid or the adsorbent. In this case, since the exhaust heat of the refrigerator 2 is used, the load on the boiler facility for supplying the heating source can be reduced, or the need for the boiler facility can be eliminated. According to the above-described method, since both the heating source and the cooling source can be supplied from the refrigerator 2, it is possible to suppress the increase in size and complexity of the facility for recovering carbon dioxide contained in the exhaust gas.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For example, an expression of an equal state such as "same", "equal" and "uniform" shall not be construed as indicating only the state in which the feature is strictly equal, but also includes a state in which there is a tolerance or a difference that can still achieve the same function.

Furthermore, in the present specification, an expression of a shape such as a rectangular shape or a cylindrical shape shall not be construed as only the geometrically strict shape, but also includes a shape with unevenness or chamfered corners within the range in which the same effect can be achieved.

Furthermore, in the present specification, an expression such as "comprise", "include", "have", "contain" and "constitute" are not intended to be exclusive of other components.

While the embodiment of the present invention has been described, the present invention is not limited to the above-described embodiments but includes modifications of the above-described embodiments and appropriate combinations of these modifications.

The contents described in the above-described several embodiments can be understood, for example, as follows.
[1] A carbon dioxide recovery system (1) according to at least one embodiment of the present disclosure is a carbon dioxide recovery system (1) configured to recover carbon dioxide contained in exhaust gas discharged from a combustion device (11), including: a refrigerator (2) including at least a compressor (21) configured to compress a first heat medium, a heat exchanger (22) configured to cool the first heat medium compressed in the compressor (21), and an expander (23) configured to expand the first heat medium cooled in the heat exchanger (22); a carbon dioxide extraction device (3) configured to absorb the carbon dioxide contained in the exhaust gas into an absorption liquid or to adsorb the carbon dioxide into an adsorbent; a separator (4) configured to separate carbon dioxide gas from the absorption liquid or the adsorbent by thermal energy of the first heat medium compressed in the compressor (21); and a liquefier (5) configured to liquefy the carbon dioxide gas separated from the absorption liquid or the adsorbent in the separator (4) by cooling energy of the first heat medium expanded in the expander (23).
   According to the configuration of [1], the liquefier (5) can liquefy the carbon dioxide gas separated from the absorption liquid or the adsorbent by using the cooling energy of the first heat medium expanded in the expander (23) of the refrigerator (2) as a cooling source. In addition, in the separator (4), the thermal energy of the first heat medium compressed in the compressor (21), which is the exhaust heat of the refrigerator (2), is used as a heating source, so that carbon dioxide gas can be separated from the absorption liquid or the adsorbent. In this case, since the exhaust heat of the refrigerator (2) is used, the load on the boiler facility for supplying the heating source can be reduced, or the need for the boiler facility can be eliminated. According to the configuration of [1], since both the heating source and the cooling source can be supplied from the refrigerator (2), it is possible to suppress the increase in size and complexity of the carbon dioxide recovery system (1), which is the facility for recovering carbon dioxide contained in the exhaust gas.
[2] In some embodiments, in the carbon dioxide recovery system described in [1], the carbon dioxide extraction device (3) is configured to absorb the carbon dioxide contained in the exhaust gas into the absorption liquid.
   According to the configuration of [2], the carbon dioxide absorbed in the absorption liquid in the carbon dioxide extraction device (3) can be separated from the absorption liquid by the separator (4), and the carbon dioxide gas separated from the absorption liquid can be liquefied by the liquefier (5).
[3] In some embodiments, in the carbon dioxide recovery system (1) described in [1], the carbon dioxide extraction device (3) is configured to adsorb the carbon dioxide contained in the exhaust gas into the adsorbent.
   According to the configuration of [3], the carbon dioxide adsorbed in the adsorbent in the carbon dioxide extraction device (3) can be separated from the adsorbent by the separator (4), and the carbon dioxide gas separated from the adsorbent can be liquefied by the liquefier (5).
[4] In some embodiments, in the carbon dioxide recovery system (1) described in [2], the compressor (21) includes an electric compressor configured to be driven by an electric motor (27) with a variable output.
   According to the configuration of [4], by increasing the output of the electric motor (27), the temperature and pressure of the first heat medium compressed in the compressor (21) can be increased, and the thermal energy of the first heat medium required as a heating source in the separator (4) can be secured. In this way, it is possible to eliminate the need for a boiler facility to supply a heating source. Furthermore, according to the configuration of [4], when the regeneration performance of the absorption liquid (carbon dioxide absorption performance) is poor, the temperature of the first heat medium at the outlet of the compressor (21) can be changed by adjusting the operating point of the turbo machine included in the refrigerator (2), such as by changing the output of the electric motor (27), thereby quickly restoring the regeneration performance of the absorption liquid.
[5] In some embodiments, in the carbon dioxide recovery system (1) described in [2] or [4], the separator (4) includes at least: a first heater (41) configured to transfer thermal energy of a second heat medium to the absorption liquid; a second heat medium supply line (42) for sending the second heat medium to the first heater (41); and a second heater (43) configured to transfer thermal energy of the first heat medium flowing between the compressor (21) and the heat exchanger (22) to the second heat medium flowing through the second heat medium supply line (42).
   According to the configuration of [5], the second heater (43) can transfer the thermal energy of the first heat medium to the second heat medium, and the first heater (41) can transfer the thermal energy of the second heat medium transferred from the first heat medium to the absorption liquid. Furthermore, according to the configuration of [5], unused exhaust heat of a plant equipped with the carbon dioxide recovery system (1) can be used as the second heat medium introduced into the second heat medium supply line (42) or as a heating source for the second heat medium. In this case, the thermal energy of the unused exhaust heat can be used as part of the heat required as a heating source in the separator (4).
[6] In some embodiments, in the carbon dioxide recovery system (1) described in [5], the refrigerator (2) further includes a first heat medium supply line (24C) for sending the first heat medium from the liquefier (5) to the compressor (21), and the separator (4) further includes a third heater (45) configured to transfer thermal energy of the second heat medium flowing through the second heat medium supply line (42) to the first heat medium flowing through the first heat medium supply line (24C).
   According to the configuration of [6], by the heat exchange in the third heater (45), the second heat medium introduced into the second heater (43) is cooled, and the first heat medium introduced into the compressor (21) is heated. In this way, the amount of heat that the second heat medium recovers from the first heat medium in the second heater (43), and that is transferred to the absorption liquid in the first heater (41) (the amount of heat supplied to the regeneration tower 35) can be increased.
[7] In some embodiments, in the carbon dioxide recovery system (1) described in [6], an upstream end (421) of the second heat medium supply line (42) is connected to the first heater (41).
   According to the configuration of [7], the second heat medium from which thermal energy has been recovered by the absorption liquid in the first heater (41) is introduced into the third heater (45). Then, by the heat exchange in the third heater (45), the second heat medium introduced into the second heater (43) is cooled, and the first heat medium introduced into the compressor (21) is heated. In this case, by circulating the second heat medium, it is possible to suppress a decrease in the coefficient of performance of the refrigerator (2), while increasing the amount of heat that the second heat medium recovers from the first heat medium in the second heater (43), and that is transferred to the absorption liquid in the first heater (41) (the amount of heat supplied to the regeneration tower 35).
[8] In some embodiments, the carbon dioxide recovery system (1) described in any one of [2], [4], [5], [6] or [7] further includes a first fuel tank (61) configured to store a first fuel in a liquid state; a first combustion device (62) configured to combust the first fuel; a first fuel supply line (63) for sending the first fuel extracted from the first fuel tank (61) to the first combustion device (62); and an auxiliary liquefier (64) configured to liquefy the carbon dioxide gas flowing through a second carbon dioxide gas supply line (55), which branches from a first carbon dioxide gas supply line (gas line 52) for sending the carbon dioxide gas from the separator (4) to the liquefier (5), by cooling energy of the first fuel flowing through the first fuel supply line (63).
   According to the configuration of [8], in the refrigerator (2), the thermal energy of the first heat medium compressed in the compressor (21), which is the heating source of the separator (4), may be greater than the cooling energy of the first heat medium expanded in the expander (23), which is the cooling source of the liquefier (5). In this case, if carbon dioxide is to be recovered up to the maximum heating source capacity, the cooling energy required to liquefy the carbon dioxide is insufficient. The auxiliary liquefier (64) can liquefy a portion of the carbon dioxide gas separated from the absorption liquid. In other words, the cooling energy of the first fuel can compensate for the cooling energy shortage of the refrigerator (2).
[9] In some embodiments, the carbon dioxide recovery system (1) described in [8] further includes an absorption liquid cooler (65) configured to cool the absorption liquid or a heat medium that exchanges heat with the absorption liquid by the cooling energy of the first fuel flowing downstream of the auxiliary liquefier (64) of the first fuel supply line (63).
   According to the configuration of [9], the absorption liquid can be cooled directly by the cooling energy of the first fuel through the heat exchange in the absorption liquid cooler (65), or indirectly through the heat medium that exchanges heat with the absorption liquid. By cooling the absorption liquid, the efficiency of absorbing carbon dioxide from the exhaust gas can be improved.
[10] In some embodiments, the carbon dioxide recovery system (1) described in [9] further includes an absorption liquid precooler (66) configured to cool the absorption liquid guided to the absorption liquid cooler (65) or the heat medium that exchanges heat with the absorption liquid by a cooling liquid.
   According to the configuration of [10], the temperature of the absorption liquid can be adjusted by adjusting the amount of cooling (amount of heat exchange) in the absorption liquid precooler (66), without changing the amount of heat exchange in the auxiliary liquefier (64).
[11] In some embodiments, in the carbon dioxide recovery system (1) described in [3], the refrigerator (2) further includes a first heat medium supply line (24C) for sending the first heat medium from the liquefier (5) to the compressor (21), the carbon dioxide extraction device (3) includes: a first casing (71A) that contains the adsorbent, the first casing (71A) being configured so that the separator (4) separates the carbon dioxide gas from the adsorbent contained inside the first casing (71A), and a second casing (71B) that contains the adsorbent and is different from the first casing (71A), and the carbon dioxide recovery system (1) further includes a preheater (91) configured to transfer thermal energy of at least one of the adsorbent contained in the second casing (71B) or the exhaust gas having passed through the second casing to the first heat medium flowing through the first heat medium supply line (24C).
   According to the configuration of [11], the first heat medium introduced into the compressor (21) is heated by the thermal energy of the adsorbent (adsorption heat generated when the adsorbent adsorbs carbon dioxide) or the thermal energy of the exhaust gas heated by the adsorption heat through the heat exchange in the preheater (91). In this case, the thermal energy of the adsorbent (adsorption heat) or the thermal energy of the exhaust gas heated by the adsorption heat can be used as part of the heat required as a heating source in the separator (4).
[12] In some embodiments, in the carbon dioxide recovery system (1) described in [11], the preheater (91) includes: a first preheater (91A) configured to transfer thermal energy of the adsorbent contained in the second casing (71B) to the first heat medium flowing through the first heat medium supply line (24C); and a second preheater (91B) configured to transfer thermal energy of the exhaust gas having passed through the second casing (71B) to the first heat medium flowing through the first heat medium supply line (24C).
   According to the configuration of [12], the first heat medium introduced into the compressor (21) is heated in multiple stages by the heat exchange in the first preheater (91A) and the second preheater (91B), thereby efficiently raising the temperature of the first heat medium introduced into the compressor (21).
[13] In some embodiments, in the carbon dioxide recovery system (1) described in [11] or [12], the carbon dioxide extraction device (3) further includes: an exhaust gas introduction line (80A) for guiding the exhaust gas to the second casing (71B); and an exhaust gas compressor (81) configured to compress the exhaust gas flowing through the exhaust gas introduction line (80A), and the carbon dioxide recovery system (1) further includes an auxiliary preheater (92) configured to transfer thermal energy of the exhaust gas flowing through the exhaust gas introduction line (80A) compressed in the exhaust gas compressor (81) to the first heat medium flowing through the first heat medium supply line (24C).
   According to the configuration of [13], the exhaust gas flowing through the exhaust gas introduction line (80A) compressed in the exhaust gas compressor (81) becomes hotter than the adsorption heat of the adsorbent contained in the second casing (71B). By the heat exchange in the auxiliary preheater (92), the first heat medium introduced into the compressor (21) can be heated by exhaust gas having a higher temperature than the adsorption heat. In this way, the temperature of the first heat medium introduced into the compressor (21) can be efficiently increased. In addition, by the heat exchange in the auxiliary preheater (92), the exhaust gas flowing through the exhaust gas introduction line (80A) can be cooled, thereby improving the adsorbent adsorption efficiency in the second casing (71B).
[14] In some embodiments, the carbon dioxide recovery system (1) described in any one of [11] to [13] further includes a vacuum compressor (87) provided in a carbon dioxide gas discharge line (74) for discharging the carbon dioxide gas from the first casing (71A).
   According to the configuration of [14], by driving the vacuum compressor (87), the internal pressure of the first casing (71A) can be reduced, and therefore, the efficiency of separating the carbon dioxide gas from the adsorbent contained in the first casing (71A) can be improved.
[15] In some embodiments, in the carbon dioxide recovery system (1) described in any of [2] and [4] to [10], the separator includes: an absorption liquid line (38a) through which the absorption liquid that has absorbed the carbon dioxide contained in the exhaust gas flows; and a heater (48) configured to transfer the thermal energy of the first heat medium flowing between the compressor and the heat exchanger to the absorption liquid flowing through the absorption liquid line.
   According to the configuration of [15], by changing the compression ratio of the compressor of the refrigerator, the amount of heat and temperature of the heat supplied to the absorption liquid by the heater can be freely adjusted. In addition, compared to the carbon dioxide recovery system described in [5], there is no need to provide a second heat medium supply line, so the configuration can be simplified. In addition, compared to the case where steam is used as the second heat medium in the carbon dioxide recovery system described in [5], there is no need to generate steam, so the degree of freedom regarding the operating conditions of the compressor can be increased. In addition, even if the compression ratio of the compressor of the refrigerator is changed, it is only necessary to increase the pressure resistance performance within the liquefaction cycle system, so that the feasibility of the facility can be ensured at a relatively low cost.
[16] In some embodiments, the carbon dioxide recovery system (1) described in any of [2], [4] to [10], and [15] further includes a carbon dioxide gas supply line (52) for sending the carbon dioxide gas separated from the absorption liquid in the separator to the liquefier; and a dehumidifying device (105, 102) provided in the carbon dioxide gas supply line to remove moisture contained in the gas flowing through the carbon dioxide gas supply line.
   According to the knowledge of the inventors of the present application, the gas separated from the absorption liquid in the separator contains a certain amount of moisture, and when this moisture is supplied to the heat exchanger of the liquefier, this moisture turns into ice in the heat exchanger, reducing the efficiency of heat exchange in the heat exchanger. For this reason, as described in [16], by removing moisture contained in the gas flowing through the carbon dioxide gas supply line using the dehumidifying device, it is possible to suppress the generation of ice in the heat exchanger of the liquefier and increase the efficiency of heat exchange between the first heat medium and the carbon dioxide gas in the heat exchanger.
[17] In some embodiments, in the carbon dioxide recovery system (1) described in any of [2], [4] to [10], [15], and [16], the separator includes: an absorption liquid line (38c) through which the absorption liquid that has absorbed the carbon dioxide contained in the exhaust gas flows; and a heater (108) configured to transfer thermal energy of the exhaust gas discharged from the combustion device to the absorption liquid flowing through the absorption liquid line.
   According to the configuration of [17], the carbon dioxide can be separated from the absorption liquid by the heater using the thermal energy of the exhaust gas from the combustion device, and the absorption liquid can be regenerated.
[18] In some embodiments, in the carbon dioxide recovery system (1) described in any of [2], [4] to [10], and [15] to [17], the separator includes: an absorption liquid line (38a) through which the absorption liquid that has absorbed the carbon dioxide contained in the exhaust gas flows; a first heater (108) configured to transfer thermal energy of the exhaust gas discharged from the combustion device to the absorption liquid flowing through the absorption liquid line; and a second heater (48) configured to transfer thermal energy of the first heat medium flowing between the compressor and the heat exchanger to the absorption liquid flowing through the absorption liquid line, and the first heater is provided downstream of the second heater in the absorption liquid line.
   According to the configuration of [18], even if the second heater alone cannot raise the temperature of the absorption liquid flowing through the absorption liquid line to the temperature required to separate carbon dioxide (for example, about 120°C when the absorption liquid is an amine liquid), for example, when the compressor of the refrigerator is operated at a low pressure ratio, the absorption liquid flowing through the absorption liquid line can be further heated by the first heater downstream of the second heater, and the temperature of the absorption liquid flowing through the absorption liquid line can be raised to the temperature required to separate carbon dioxide. Therefore, even when the compressor of the refrigerator is operated at a low pressure ratio, economical operation is possible without wasting the heat generated in the liquefaction cycle.
[19] In some embodiments, the carbon dioxide recovery system (1) described in any one of [4] to [10] and [15] to [18] further includes a control device (110) configured to control the electric compressor, wherein the control device is configured to increase a pressure ratio of the electric compressor as a load on the combustion device increases.
   When the load on the combustion device increases, the flow rate of the exhaust gas from the combustion device increases, so when the load on the combustion device fluctuates, the required heat amount, which is the amount of heat required to regenerate the absorption liquid that absorbs carbon dioxide in the exhaust gas, fluctuates according to the load on the combustion device. On the other hand, the amount of exhaust heat derived from the liquefaction cycle (the amount of heat transferred from the first heat medium compressed by the compressor of the refrigerator to the absorption liquid) increases as the pressure ratio of the electric compressor of the refrigerator increases. For this reason, by increasing the pressure ratio of the electric compressor of the refrigerator as the load on the combustion device increases, it is possible to suppress the fluctuation in the load on the boiler separately provided to heat the absorption liquid, and to reduce the operation cost required for adjusting the operation of the boiler.
[20] In some embodiments, the carbon dioxide recovery system (1) described in any one of [4] to [10] and [15] to [19] further includes a control device (110) configured to control the electric compressor, and the control device is configured to adjust a pressure ratio of the electric compressor based on information related to a unit price of electricity and information related to a unit price of fuel.
   According to the configuration of [20], the pressure ratio of the compressor can be adjusted based on information related to the unit price of electricity and information related to the unit price of fuel, so that the overall running cost of the carbon dioxide recovery system, for example, is reduced. For example, during the nighttime hours when the unit price of electricity is relatively cheap, the pressure ratio of the electric compressor can be increased while the load on a boiler separately provided for heating the absorption liquid is reduced, thereby reducing the overall running cost of the carbon dioxide recovery system.
[21] In some embodiments, the carbon dioxide recovery system (1) described in any one of [4] to [10] and [15] to [20] includes: a regeneration tower (35) into which the absorption liquid that has absorbed the carbon dioxide contained in the exhaust gas is introduced; an absorption liquid circulation line (38a) that extracts the absorption liquid from the regeneration tower and returns the absorption liquid to the regeneration tower; a heater (58) that heats the absorption liquid flowing through the absorption liquid circulation line; a carbon dioxide gas supply line (52) for sending the carbon dioxide gas separated from the absorption liquid in the separator to the liquefier; and a control device (11) configured to control the electric compressor based on at least one of a temperature downstream of the heater in the absorption liquid circulation line and a flow rate of the gas flowing through the carbon dioxide gas supply line.
   The regeneration characteristics of the absorption liquid, such as an amine liquid, change due to deterioration over time. Specifically, as the liquid deteriorates, the amount of heat required for regeneration increases, or the threshold temperature required for regeneration increases, meaning that the liquid must be heated to a higher temperature to separate carbon dioxide gas. In addition, the above-described characteristic changes may occur when the absorption liquid is changed. Regarding such changes in the characteristics of the absorption liquid, when the amount of heat required for regeneration of the absorption liquid is provided by a single boiler, for example, the degree of freedom in operating the boiler is low and it is difficult to follow the changes in the characteristics of the absorption liquid. However, as described in [21], by controlling the pressure ratio of the electric compressor based on at least one of the temperature downstream of the heater in the absorption liquid circulation line and the flow rate of the gas flowing through the carbon dioxide gas supply line, the absorption liquid can be regenerated with the optimal amount of heat and/or temperature so as to follow the changes in the characteristics of the absorption liquid due to the deterioration of the absorption liquid over time, and the replacement life of the absorption liquid can be extended to reduce running costs.
[22] In some embodiments, in the carbon dioxide recovery system (1) described in any one of [4] to [10] and [15] to [21], the separator includes: a first absorption liquid line (38a) through which the absorption liquid that has absorbed the carbon dioxide contained in the exhaust gas flows; a steam compressor (120); and a first heater (122) configured to transfer thermal energy of the steam pressurized by the steam compressor to the absorption liquid flowing through the first absorption liquid line.
   According to the configuration of [22], by using a steam compressor with a high COP (coefficient of performance), it is possible to drive the refrigeration cycle at a lower running cost than when the heat required for regenerating the absorption liquid is provided by a boiler. In addition, since there is no need to provide a boiler for regenerating the absorption liquid, there is no need to supply fuel for recovering carbon dioxide.
[23] In some embodiments, in the carbon dioxide recovery system (1) described in [22], the separator includes: a second absorption liquid line (38d) through which the absorption liquid that has absorbed the carbon dioxide contained in the exhaust gas flows; and a second heater (128) configured to transfer surplus heat from a plant to the absorption liquid flowing through the second absorption liquid line.
   According to the configuration of [23], the steam compressor can adjust the amount of heat generated as desired by adjusting the amount of electric power input, and therefore, can adjust the sum of the amounts of heat supplied to the absorption liquid. Therefore, even if the surplus heat available in the plant, which fluctuates greatly, is utilized by the second heater, the amount of heat supplied to the absorption liquid can be kept constant by adjusting the load on the steam compressor.
[24] In some embodiments, in the carbon dioxide recovery system (1) described in any of [3] and [11] to [14], the combustion device includes an engine (11) and an engine-mounted turbocharger (96) configured to be driven by exhaust gas from the engine and compress intake air of the engine, the carbon dioxide recovery system includes: a first turbocharger (130) that compresses the exhaust gas discharged from a turbine of the engine-mounted turbocharger; a surplus exhaust gas line (97) that bypasses the turbine of the engine-mounted turbocharger and supplies the exhaust gas from the engine to a downstream side of the turbine; and a second turbocharger (131) including a turbine (140) provided in the surplus exhaust gas line and a compressor (141) that compresses the exhaust gas discharged from the turbine of the engine-mounted turbocharger, and the compressor (21) of the first turbocharger functions as the compressor of the refrigerator, and the turbine (23) of the first turbocharger functions as the expander of the refrigerator.
   According to the configuration of [24], in a combustion device including an engine and an engine-mounted turbocharger, a large amount of surplus exhaust gas (exhaust gas flowing through the surplus exhaust gas line) that bypasses the turbine of the engine-mounted turbocharger is likely to be generated, especially in winter, due to changes in air density caused by seasonal fluctuations. For this reason, by providing a second turbocharger as described above, it is possible to recover power from the surplus exhaust gas, thereby reducing the power required for cycle operation.
[25] A carbon dioxide recovery system (1) according to at least one embodiment of the present disclosure is a carbon dioxide recovery system (1) configured to recover carbon dioxide contained in exhaust gas discharged from a combustion device (11), including: a turbocharger (130) having a compressor (21) configured to compress the exhaust gas and a turbine (23) connected to the compressor; a carbon dioxide extraction device (3) configured to adsorb the carbon dioxide contained in the exhaust gas compressed by the compressor into an adsorbent; a separator (4) configured to separate carbon dioxide gas from the adsorbent; a nitrogen gas discharge line (152) configured to supply nitrogen gas discharged from the separator to the turbine; and a liquefier (5) configured to liquefy the carbon dioxide gas separated from the adsorbent in the separator by cooling energy of the nitrogen gas expanded in the turbine.
   According to the configuration of [25], by supplying the nitrogen gas separated from the separator to the turbine, the power of the compressor compressing the exhaust gas can be reduced. In addition, the carbon dioxide gas separated from the adsorbent in the separator can be liquefied in a liquefier by utilizing the cooling energy of the nitrogen gas expanded in the turbine. In this way, it is possible to suppress the increase in size and complexity of the carbon dioxide recovery system, which is the facility for recovering carbon dioxide contained in the exhaust gas.
[26] A carbon dioxide recovery method according to at least one embodiment of the present disclosure is a carbon dioxide recovery method for recovering carbon dioxide contained in exhaust gas discharged from a combustion device (11), including: a carbon dioxide extraction step for absorbing carbon dioxide contained in the exhaust gas into an absorption liquid or adsorbing the carbon dioxide into an adsorbent; a compression step for compressing a first heat medium by a compressor (21) of a refrigerator (2); a cooling step for cooling the first heat medium compressed in the compressor (21) by a heat exchanger (22) of the refrigerator (2); an expansion step for expanding the first heat medium cooled in the heat exchanger (22) by an expander (23) of the refrigerator (2); a separation step for separating carbon dioxide gas from the absorption liquid or the adsorbent by thermal energy of the first heat medium compressed in the compressor (21); and a liquefaction step for liquefying the carbon dioxide gas separated from the absorption liquid or the adsorbent in the separation step by cooling energy of the first heat medium expanded in the expander (23).
   According to the method of [15], in the liquefaction step, the cooling energy of the first heat medium expanded in the expander (23) of the refrigerator (2) is used as a cooling source to liquefy the carbon dioxide gas separated from the absorption liquid or the adsorbent. In addition, in the separation step, the thermal energy of the first heat medium compressed in the compressor (21), which is the exhaust heat of the refrigerator (2), is used as a heating source, so that the carbon dioxide gas can be separated from the absorption liquid or the adsorbent. In this case, since the exhaust heat of the refrigerator (2) is used, the load on the boiler facility for supplying the heating source can be reduced, or the need for the boiler facility can be eliminated. According to the method of [13], since both the heating source and the cooling source can be supplied from the refrigerator (2), it is possible to suppress the increase in size and complexity of the facility for recovering the carbon dioxide contained in the exhaust gas.
[27] In some embodiments, in the carbon dioxide recovery method described in [26], the compressor includes an electric compressor configured to be driven by an electric motor with a variable output, and in the compression step, a pressure ratio of the electric compressor is increased as a load on the combustion device increases.
   When the load on the combustion device increases, the flow rate of the exhaust gas from the combustion device increases, so when the load on the combustion device fluctuates, the required heat amount, which is the amount of heat required to regenerate the absorption liquid that absorbs carbon dioxide in the exhaust gas, fluctuates according to the load on the combustion device. On the other hand, the amount of exhaust heat derived from the liquefaction cycle (the amount of heat transferred from the first heat medium compressed by the compressor of the refrigerator to the absorption liquid) increases as the pressure ratio of the electric compressor of the refrigerator increases. For this reason, by increasing the pressure ratio of the electric compressor of the refrigerator as the load on the combustion device increases, it is possible to suppress the fluctuation in the load on the boiler separately provided to heat the absorption liquid, and to reduce the operation cost required for adjusting the operation of the boiler.
[28] In some embodiments, in the carbon dioxide recovery method described in [26] or [27], the compressor includes an electric compressor configured to be driven by an electric motor with a variable output, and in the compression step, a pressure ratio of the electric compressor is adjusted based on information on a unit price of electricity and information on a unit price of fuel.
   According to the method of [28], the pressure ratio of the compressor can be adjusted based on information related to the unit price of electricity and information related to the unit price of fuel, so that the overall running cost of the carbon dioxide recovery system, for example, is reduced. For example, during the nighttime hours when the unit price of electricity is relatively cheap, the pressure ratio of the electric compressor can be increased while the load on a boiler separately provided for heating the absorption liquid is reduced, thereby reducing the overall running cost of the carbon dioxide recovery system.
[29] In some embodiments, the carbon dioxide recovery method according to any one of [26] to [28], the compressor includes an electric compressor configured to be driven by an electric motor (27) with a variable output, in the carbon dioxide extraction step, the carbon dioxide contained in the exhaust gas is absorbed into an absorption liquid, and in the compression step, a pressure ratio of the electric compressor is adjusted based on at least one of a temperature of the absorption liquid on its way back to a regeneration tower (35) after being heated by a heater (58) and a flow rate of the gas containing the carbon dioxide gas that has exited the regeneration tower.

According to the method of [28], the regeneration characteristics of the absorption liquid, such as an amine liquid, change due to deterioration over time. Specifically, as the liquid deteriorates, the amount of heat required for regeneration increases, or the threshold temperature required for regeneration increases, meaning that the liquid must be heated to a higher temperature to separate carbon dioxide gas. In addition, the above-described characteristic changes may occur when the absorption liquid is changed. Regarding such changes in the characteristics of the absorption liquid, when the amount of heat required for regeneration of the absorption liquid is provided by a single boiler, for example, the degree of freedom in operating the boiler is low and it is difficult to follow the changes in the characteristics of the absorption liquid. However, as described in [21], by controlling the pressure ratio of the electric compressor based on at least one of the temperature downstream of the heater in the absorption liquid circulation line and the flow rate of the gas flowing through the carbon dioxide gas supply line, the absorption liquid can be regenerated with the optimal amount of heat and/or temperature so as to follow the changes in the characteristics of the absorption liquid due to the deterioration of the absorption liquid over time, and the replacement life of the absorption liquid can be extended to reduce running costs.

### Reference Signs List

1 Carbon dioxide recovery system
2 Refrigeration unit
3 Carbon dioxide extraction unit
4 Separator
5 Liquefier
11 Combustion unit
21, 99, 141, 521 Compressor
22, 51, 51A Heat exchanger
23 Expansion unit
24, 56 Circulation line
24A Expansion gas line
24B Compressed gas line
24C First heat medium supply line
25, 103, 104, 134, 137, 139 Cooler
26, 83 Rotating shaft
27, 84, 89, 144, 522 Electric motor
31 Absorption tower
32 Cooling tower
33 Cooling water circulation line
34 Cooling water cooler
35 Regeneration tower
36, 37 Absorption liquid circulation line
38a First absorption liquid circulation line
38b Second absorption liquid circulation line
38c Third absorption liquid circulation line
38d Fourth absorption liquid circulation line
39 Distribution valve
41, 41A First heater
42, 42A Second heat medium supply line
43, 43A Second heater
44, 44B, 49, 60, 631 Pump
45 Third heater
46 Second heat medium storage section
47 Auxiliary boiler
52 Gas line
53 Liquid line
54, 54A, 77 Storage tank
55 Second carbon dioxide gas supply line
57 Boiler
59 Condenser
61 First fuel tank
62 First combustion device
63 First fuel supply line
64 Auxiliary liquefier
65 Absorption liquid cooler
66 Absorption liquid precooler
71, 71A, 71B Casing
72, 80A Exhaust gas introduction line
73, 86 Exhaust gas precooler
74 Carbon dioxide gas exhaust line
75 Carbon dioxide gas precooler
76 Liquid carbon dioxide exhaust line
80B Exhaust gas exhaust line
81 Exhaust gas compressor
82 Exhaust gas expander
87 Vacuum compressor
88 Output shaft
91, 91A, 91B Preheater
92 Auxiliary preheater
93 Intake line
94 Air cooler
95 Exhaust gas line
96 Engine-mounted turbocharger
97 Surplus exhaust gas line
98 Exhaust heat recovery steam boiler
100, 140 Turbine
101 Bypass valve
102 Carbon dioxide separation device
105, 135 Dehumidification tower
106 Dehumidification heater
107 Dehumidification blower
110 Control device
112 Flow meter
114 Thermometer
120 Steam compressor
123 Water tank
124 Low pressure compressor
125 High pressure compressor
126 Pressure reducing valve
130 Exhaust gas power recovery turbocharger
131 Surplus exhaust gas power recovery turbocharger
132 Mist injection device
133 Regenerative heat exchanger
136 Adsorption tower
138 Carbon dioxide liquefaction compressor
143 Bypass line
152 Nitrogen gas exhaust line
221 Low-temperature side heat exchange section
222 High-temperature side heat exchange section
302 Processor
304 RAM
306 ROM
308 HDD
310 Input I/F
312 Output I/F
314 Bus
421 Upstream end
511, 511A First heat medium side heat exchange section
512, 512A Carbon dioxide gas side heat exchange section
531 Vacuum pump
532 Electric motor
711, 711A Heat exchange section

## Claims

1. A carbon dioxide recovery system configured to recover carbon dioxide contained in exhaust gas discharged from a combustion device, comprising:
a refrigerator including at least a compressor configured to compress a first heat medium, a heat exchanger configured to cool the first heat medium compressed in the compressor, and an expander configured to expand the first heat medium cooled in the heat exchanger;
a carbon dioxide extraction device configured to absorb the carbon dioxide contained in the exhaust gas into an absorption liquid or to adsorb the carbon dioxide into an adsorbent;
a separator configured to separate carbon dioxide gas from the absorption liquid or the adsorbent by thermal energy of the first heat medium compressed in the compressor; and
a liquefier configured to liquefy the carbon dioxide gas separated from the absorption liquid or the adsorbent in the separator by cooling energy of the first heat medium expanded in the expander.

2. The carbon dioxide recovery system according to claim 1, wherein
the carbon dioxide extraction device is configured to absorb the carbon dioxide contained in the exhaust gas into the absorption liquid.

3. The carbon dioxide recovery system according to claim 1, wherein
the carbon dioxide extraction device is configured to adsorb the carbon dioxide contained in the exhaust gas into the adsorbent.

4. The carbon dioxide recovery system according to claim 2, wherein
the compressor includes an electric compressor configured to be driven by an electric motor with a variable output.

5. The carbon dioxide recovery system according to claim 2 or 4, wherein
the separator includes at least:
a first heater configured to transfer thermal energy of a second heat medium to the absorption liquid;
a second heat medium supply line for sending the second heat medium to the first heater; and
a second heater configured to transfer thermal energy of the first heat medium flowing between the compressor and the heat exchanger to the second heat medium flowing through the second heat medium supply line.

6. The carbon dioxide recovery system according to claim 5, wherein
the refrigerator further includes a first heat medium supply line for sending the first heat medium from the liquefier to the compressor, and
the separator further includes a third heater configured to transfer thermal energy of the second heat medium flowing through the second heat medium supply line to the first heat medium flowing through the first heat medium supply line.

7. The carbon dioxide recovery system according to claim 6, wherein
an upstream end of the second heat medium supply line is connected to the first heater.

8. The carbon dioxide recovery system according to claim 2 or 4, further comprising:
a first fuel tank configured to store a first fuel in a liquid state;
a first combustion device configured to combust the first fuel;
a first fuel supply line for sending the first fuel extracted from the first fuel tank to the first combustion device; and
an auxiliary liquefier configured to liquefy the carbon dioxide gas flowing through a second carbon dioxide gas supply line, which branches from a first carbon dioxide gas supply line for sending the carbon dioxide gas from the separator to the liquefier, by cooling energy of the first fuel flowing through the first fuel supply line.

9. The carbon dioxide recovery system according to claim 8, further comprising:
an absorption liquid cooler configured to cool the absorption liquid or a heat medium that exchanges heat with the absorption liquid by the cooling energy of the first fuel flowing downstream of the auxiliary liquefier of the first fuel supply line.

10. The carbon dioxide recovery system according to claim 9, further comprising:
an absorption liquid precooler configured to cool the absorption liquid guided to the absorption liquid cooler or the heat medium that exchanges heat with the absorption liquid by a cooling liquid.

11. The carbon dioxide recovery system according to claim 3, wherein
the refrigerator further includes a first heat medium supply line for sending the first heat medium from the liquefier to the compressor,
the carbon dioxide extraction device includes:
a first casing that contains the adsorbent, the first casing being configured so that the separator separates the carbon dioxide gas from the adsorbent contained inside the first casing; and
a second casing that contains the adsorbent and is different from the first casing, and
the carbon dioxide recovery system further includes a preheater configured to transfer thermal energy of at least one of the adsorbent contained in the second casing or the exhaust gas having passed through the second casing to the first heat medium flowing through the first heat medium supply line.

12. The carbon dioxide recovery system according to claim 11, wherein
the preheater includes:
a first preheater configured to transfer thermal energy of the adsorbent contained in the second casing to the first heat medium flowing through the first heat medium supply line; and
a second preheater configured to transfer thermal energy of the exhaust gas having passed through the second casing to the first heat medium flowing through the first heat medium supply line.

13. The carbon dioxide recovery system according to claim 11 or 12, wherein
the carbon dioxide extraction device further includes:
an exhaust gas introduction line for guiding the exhaust gas to the second casing; and
an exhaust gas compressor configured to compress the exhaust gas flowing through the exhaust gas introduction line, and
the carbon dioxide recovery system further includes an auxiliary preheater configured to transfer thermal energy of the exhaust gas flowing through the exhaust gas introduction line compressed in the exhaust gas compressor to the first heat medium flowing through the first heat medium supply line.

14. The carbon dioxide recovery system according to claim 11 or 12, further comprising:
a vacuum compressor provided in a carbon dioxide gas discharge line for discharging the carbon dioxide gas from the first casing.

15. The carbon dioxide recovery system according to claim 2 or 4, wherein
the separator includes:
an absorption liquid line through which the absorption liquid that has absorbed the carbon dioxide contained in the exhaust gas flows; and
a heater configured to transfer the thermal energy of the first heat medium flowing between the compressor and the heat exchanger to the absorption liquid flowing through the absorption liquid line.

16. The carbon dioxide recovery system according to claim 2 or 4, further comprising:
a carbon dioxide gas supply line for sending the carbon dioxide gas separated from the absorption liquid in the separator to the liquefier; and
a dehumidifying device provided in the carbon dioxide gas supply line to remove moisture contained in the gas flowing through the carbon dioxide gas supply line.

17. The carbon dioxide recovery system according to claim 2 or 4, wherein
the separator includes:
an absorption liquid line through which the absorption liquid that has absorbed the carbon dioxide contained in the exhaust gas flows; and
a heater configured to transfer thermal energy of the exhaust gas discharged from the combustion device to the absorption liquid flowing through the absorption liquid line.

18. The carbon dioxide recovery system according to claim 2 or 4, wherein
the separator includes:
an absorption liquid line through which the absorption liquid that has absorbed the carbon dioxide contained in the exhaust gas flows;
a first heater configured to transfer thermal energy of the exhaust gas discharged from the combustion device to the absorption liquid flowing through the absorption liquid line; and
a second heater configured to transfer thermal energy of the first heat medium flowing between the compressor and the heat exchanger to the absorption liquid flowing through the absorption liquid line, and
the first heater is provided downstream of the second heater in the absorption liquid line.

19. The carbon dioxide recovery system according to claim 4, further comprising:
a control device configured to control the electric compressor, wherein
the control device is configured to increase a pressure ratio of the electric compressor as a load on the combustion device increases.

20. The carbon dioxide recovery system according to claim 4, further comprising:
a control device configured to control the electric compressor, wherein
the control device is configured to adjust a pressure ratio of the electric compressor based on information related to a unit price of electricity and information related to a unit price of fuel.

21. The carbon dioxide recovery system according to claim 4, further comprising:
a regeneration tower into which the absorption liquid that has absorbed the carbon dioxide contained in the exhaust gas is introduced;
an absorption liquid circulation line that extracts the absorption liquid from the regeneration tower and returns the absorption liquid to the regeneration tower;
a heater that heats the absorption liquid flowing through the absorption liquid circulation line;
a carbon dioxide gas supply line for sending the carbon dioxide gas separated from the absorption liquid in the separator to the liquefier; and
a control device configured to control the electric compressor based on at least one of a temperature downstream of the heater in the absorption liquid circulation line and a flow rate of the gas flowing through the carbon dioxide gas supply line.

22. The carbon dioxide recovery system according to claim 2 or 4, wherein
the separator includes:
a first absorption liquid line through which the absorption liquid that has absorbed the carbon dioxide contained in the exhaust gas flows;
a steam compressor; and
a first heater configured to transfer thermal energy of the steam pressurized by the steam compressor to the absorption liquid flowing through the first absorption liquid line.

23. The carbon dioxide recovery system according to claim 22, wherein
the separator includes:
a second absorption liquid line through which the absorption liquid that has absorbed the carbon dioxide contained in the exhaust gas flows; and
a second heater configured to transfer surplus heat from a plant to the absorption liquid flowing through the second absorption liquid line.

24. The carbon dioxide recovery system according to claim 3 or 4, wherein
the combustion device includes an engine and an engine-mounted turbocharger configured to be driven by exhaust gas from the engine and compress intake air of the engine,
the carbon dioxide recovery system comprises:
a first turbocharger that compresses the exhaust gas discharged from a turbine of the engine-mounted turbocharger;
a surplus exhaust gas line that bypasses the turbine of the engine-mounted turbocharger and supplies the exhaust gas from the engine to a downstream side of the turbine; and
a second turbocharger including a turbine provided in the surplus exhaust gas line and a compressor that compresses the exhaust gas discharged from the turbine of the engine-mounted turbocharger, and
the compressor of the first turbocharger functions as the compressor of the refrigerator, and the turbine of the first turbocharger functions as the expander of the refrigerator.

25. A carbon dioxide recovery system configured to recover carbon dioxide contained in exhaust gas discharged from a combustion device, comprising:
a turbocharger having a compressor configured to compress the exhaust gas and a turbine connected to the compressor;
a carbon dioxide extraction device configured to adsorb the carbon dioxide contained in the exhaust gas compressed by the compressor into an adsorbent;
a separator configured to separate carbon dioxide gas from the adsorbent;
a nitrogen gas discharge line configured to supply nitrogen gas discharged from the separator to the turbine; and
a liquefier configured to liquefy the carbon dioxide gas separated from the adsorbent in the separator by cooling energy of the nitrogen gas expanded in the turbine.

26. A carbon dioxide recovery method for recovering carbon dioxide contained in exhaust gas discharged from a combustion device, comprising:
a carbon dioxide extraction step for absorbing carbon dioxide contained in the exhaust gas into an absorption liquid or adsorbing the carbon dioxide into an adsorbent;
a compression step for compressing a first heat medium by a compressor of a refrigerator;
a cooling step for cooling the first heat medium compressed in the compressor by a heat exchanger of the refrigerator;
an expansion step for expanding the first heat medium cooled in the heat exchanger by an expander of the refrigerator;
a separation step for separating carbon dioxide gas from the absorption liquid or the adsorbent by thermal energy of the first heat medium compressed in the compressor; and
a liquefaction step for liquefying the carbon dioxide gas separated from the absorption liquid or the adsorbent in the separation step by cooling energy of the first heat medium expanded in the expander.

27. The carbon dioxide recovery method according to claim 26, wherein
the compressor includes an electric compressor configured to be driven by an electric motor with a variable output, and
in the compression step, a pressure ratio of the electric compressor is increased as a load on the combustion device increases.

28. The carbon dioxide recovery method according to claim 26, wherein
the compressor includes an electric compressor configured to be driven by an electric motor with a variable output, and
in the compression step, a pressure ratio of the electric compressor is adjusted based on information on a unit price of electricity and information on a unit price of fuel.

29. The carbon dioxide recovery method according to claim 26, wherein
the compressor includes an electric compressor configured to be driven by an electric motor with a variable output,
in the carbon dioxide extraction step, the carbon dioxide contained in the exhaust gas is absorbed into an absorption liquid, and
in the compression step, a pressure ratio of the electric compressor is adjusted based on at least one of a temperature of the absorption liquid on its way back to a regeneration tower after being heated by a heater and a flow rate of the gas containing the carbon dioxide gas that has exited the regeneration tower.
